# EUROPEAN PATENT APPLICATION

(11) **EP 4 775 613 A1**
(43) Date of publication of application: **15.07.2026**
(21) Application number: 25212336.9
(22) Date of filing: 30.10.2025
(51) Int. Cl.: C08G 59/62, C08L 61/06, C08L 63/00, C09K 11/06, C08G 59/50

(54) **TRACER CATALYST**

(30) Priority: 30.10.2024 GB 202416001
(71) Applicant: Jones, Paul, Wrightington WN6 9PS (GB)
(72) Inventor: Jones, Paul, Wrightington WN6 9PS (GB)
(74) Representative: Mathys & Squire

(57) **Abstract**

The invention relates to a class of fluorescent Mannich base compounds useful as epoxy resin curatives, comprising a fluorophore and at least one Mannich base group. In particular, the fluorescent Mannich base, or a salt thereof, for use as an epoxy resin hardener comprises:
i) a fluorophore comprising a conjugated pi system containing at least one aromatic ring, and having a maximum excitation wavelength of from 380 nm to 750 nm, and a maximum emission wavelength of from 380 nm to 750 nm; and
ii) at least one Mannich base group, wherein the Mannich base group is an amine group bonded to an SP³ hybridised carbon atom, wherein said SP³ hybridised carbon atom is bonded to an aromatic ring; and wherein said amine group is bonded to two further groups, neither of which comprising a carboxylic acid or a carboxylic acid ester moiety; or a tautomeric precursor thereof.

## Description

The invention relates to a class of fluorescent Mannich base compounds useful as epoxy resin curatives. In particular the invention is directed to a class of fluorescent Mannich base compounds comprising a fluorophore and at least one Mannich base group, as well as a resin curative composition comprising the fluorescent Mannich base compound, processes for preparing the fluorescent Mannich base, uses thereof, a method of solubilising a fluorophore in a curative composition comprising an epoxy resin curative, and a method of fluorescently tagging a cured epoxy resin.

### BACKGROUND OF THE INVENTION

There is an array of crosslinking agents available for epoxy functional materials, but amines and products derived from amines offer the greatest versatility for curing epoxy resins. Collectively these materials offer the means of formulating systems that can provide the potential for curing in thin films and/or mass at a broad spectrum of temperatures. Polyamides and phenolic derived Mannich base curing agents have been used extensively but due to the inability of the polyamides to low temperature cure, and the regulatory and toxicity issues associated with free phenol, the scope of use and availability of these materials has substantially reduced.

Many commercial curing agent formulations are based on amines such as aliphatic, cyclo-aliphatic aryl-aliphatic and to a lesser extent aromatic amines or combinations thereof. These amines are generally modified in order to enhance the processing and/or performance aspects, to improve the active hydrogen equivalent weight and combining ratio with epoxy resins or to reduce the toxicity of the amine.

Mannich bases are examples of modified amines which offer enhanced properties, especially with regard to improved compatibility with epoxy resins, optimisation of cure speed and degree of cure, as well as resistance to carbamation. Commercially available Mannich bases include phenolic derived compounds that are the reaction product of an aldehyde (generally formaldehyde), a phenolic compound, or a substituted derivative thereof, and an amine. An example structure of a phenolic Mannich base is shown below:

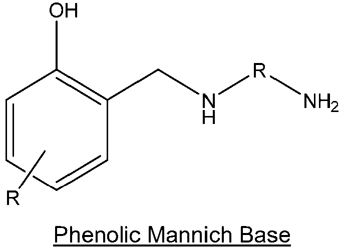

EP0779311 describes a Mannich base prepared by the Mannich reaction using (i) butyraldehyde, (ii) a phenolic compound, and (iii) a primary or a secondary polyamine. The use of butyraldehyde, rather than formaldehyde or paraformaldehyde, is reported to lower viscosity in the Mannich base products, which can be advantageous when used in epoxy curative applications.

However, the molecular weight, polydispersity and residual free phenol monomer levels have led to the reduction in availability and a decline in popularity of this class of materials. The conventional Mannich base with residual free phenol carries both acute toxicity labelling and a chronic health hazard warnings. The removal of several of the Hazard statements associated with free monomeric phenol and substituted phenols, is now mandated by some organisations, e.g. REACH (Registration, Evaluation, Authorisation and restriction of Chemicals). There remains a need for alternative Mannich bases that offer high process performance, broad compatibility with epoxy resins, and avoid the toxicity and environmental issues associated with known amine-derived epoxy resin curatives. Various specialist epoxy resin hardeners and accompanying cured epoxy resin systems have been designed to mitigate chemical toxicity, such as those described in WO2022112776 and WO2021152281, as well as to mitigate environmental damage such as those described in WO2023233151.

However, once a specialised epoxy resin curative, or epoxy resin curative system, has been cured with an epoxy resin to form a polymeric structure it may become more difficult to determine the nature and origin of the curative monomer(s). This means that once cured, specialist curing agents or curative compositions may not be readily distinguishable from counterfeits, without burdensome laboratory testing. The present invention relates to a class of fluorescent Mannich base compounds which can be easily identified as the genuine article due to their fluorescent properties. Additionally, a specialist epoxy resin hardener can be mixed with the fluorescent Mannich base in order to impart fluorescent properties onto the epoxy resin hardener or cured epoxy resin formed therefrom. The fluorescent Mannich bases of the present invention may therefore also function as a fluorescent 'tag' which can be incorporated into cured epoxy resins in order to provide information and assurance as to their origin.

Fluorescence is a process in which a molecule absorbs light at one wavelength and then emits light at a different wavelength. Fluorescent molecules absorb energy from incoming light, often in the ultraviolet or visible range, exciting electrons to a higher yet unstable energy level. When the excited electrons relax to a lower energy state, the excess energy is released in the form of photons, often in the visible range. In general, emitted fluorescence light has a longer wavelength and lower energy than the absorbed light, although this is not always the case.

Fluorescent molecules will include a fluorophore, which is a moiety within the molecule, or possibly the whole molecule, which is responsible for the fluorescence. In organic molecules fluorophores are conjugated pi systems, typically comprising one or more aromatic rings. Smaller conjugated pi systems, such as a single benzene ring or phenol group typically have a maximum excitation wavelength in the UV region, *e.g*. 10 nm to <380 nm. Larger conjugated pi systems, such as those comprising multicyclic aromatic rings, and possibly alkenes, alkynes, and heteroatom lone pairs, typically have a maximum excitation wavelength and maximum emission wavelength in the visible light region, e.g. 380 nm to 750 nm. These boundaries between visible and invisible wavelengths are not sharply defined and may vary per human individual. The skilled person may easily measure maximum excitation wavelength and maximum emission wavelength using UV/vis spectroscopy and/or fluorescence spectroscopy (also known as fluorimetry or spectrofluorometry) using a standard fluorometer.

Modern fluorometers are capable of detecting fluorescent molecule concentrations as low as 1 part per trillion. Therefore, fluorescent molecules are useful in security features, such as invisible inks or tags, for authentication and anti-counterfeiting purposes. The fluorescent Mannich bases of the present invention may thus serve this purpose in a cured epoxy resin, even at low concentrations.

### SUMMARY OF THE INVENTION

In one aspect, the present invention provides a fluorescent Mannich base for use as an epoxy resin hardener, wherein the fluorescent Mannich base comprises:
i) a fluorophore comprising a conjugated pi system containing at least one aromatic ring, and having a maximum excitation wavelength of from 380 nm to 750 nm, and a maximum emission wavelength of from 380 nm to 750 nm; and
ii) at least one Mannich base group, wherein the Mannich base group is an amine group bonded to an SP³ hybridised carbon atom, wherein said SP³ hybridised carbon atom is bonded to an aromatic ring; and wherein said amine group is bonded to two further groups, neither of which comprising a carboxylic acid or a carboxylic acid ester moiety;
or a tautomeric precursor thereof.

In a second aspect, the present invention provides a fluorescent Mannich base of formula (1), or a salt thereof: 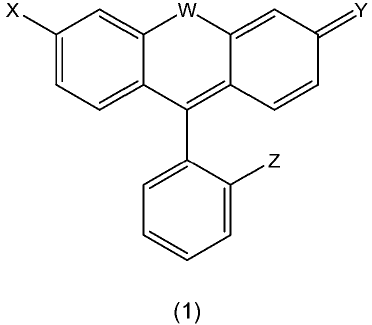
wherein the fluorescent Mannich base of formula (1) is substituted with one or more A substituents, wherein each A substituent is bonded to an aromatic carbon atom;
wherein each A substituent is independently of formula (A1) or (A2): 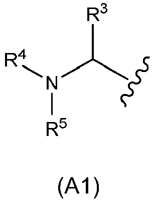 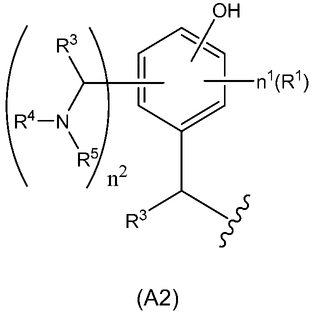
wherein 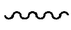 represents the point of attachment of the A substituent to the fluorescent Mannich base of formula (1);
optionally wherein the fluorescent Mannich base is substituted with one or more R¹ groups, wherein each R¹ group is bonded to an aromatic carbon atom;
wherein each R¹ is independently selected from: -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -O(CO)H, -O(CO)R², -NH(CO)H, -NH(CO)R², - NR²(CO)H, -NR²(CO)R², -SH, -SR², -SO_{2H}, -SO₂R², -SO₃R², -SO₃H, -SiR²₃, -NO₂, -CN, - F, -Cl, -Br, and -I;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino;
wherein W is selected from -O-, -SO₂-, SiMe₂-, -CO-, and -PO₂-, a direct bond, or wherein W is absent;
wherein X is selected from -OR⁶ and -NR⁶_{2;}
wherein Y is selected from =O, =NR⁶, and =NR⁶₂⁺;
wherein Z is selected from -H, -COOR⁶, -CONR⁶₂, -SO₂OR⁶, -SO₂NR⁶₂, and - CONHNHR⁶;
wherein each R³ is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl; wherein each R³ is optionally substituted with one or more groups selected from -C₁ to C₁₀ alkyl, -C₁ to C₁₀ haloalkyl, -C₁ to C₁₀ alkoxy, -OH, and =O;
wherein each R⁴ is independently selected from: -H, and -C₁ to C₁₀₀ hydrocarbyl group;
wherein each R⁵ is independently selected from: -H, and -C₁ to C₁₀₀ hydrocarbyl group; wherein each R⁴ and R⁵ bonded the same nitrogen atom may be taken together to form a -C₃ to C₁₀₀ hydrocarbyl group;
with the proviso that none of the R⁴ or R⁵ groups comprises a carboxylic acid or a carboxylic acid ester;
each R⁶ is independently selected from -H, and a -C₁ to C₅₀ hydrocarbyl group;
wherein each n¹ is independently from 0 to 3;
wherein each n² is independently 1 or 2; and
with the proviso that n¹ + n² for each individual A2 substituent is from 1 to 4;
   or a tautomeric precursor thereof.

In a third aspect, the present invention provides a process for preparing a fluorescent Mannich base as defined herein, or a tautomeric precursor thereof, the process comprising performing a Mannich reaction using:
i) a fluorescent compound comprising a conjugated pi system containing at least one aromatic ring, or a tautomeric precursor thereof;
ii) an active amine; and
iii) an aldehyde;
wherein the active amine does not comprise a carboxylic acid or a carboxylic acid ester group.

In a fourth aspect, the present invention provides a curative composition comprising the fluorescent Mannich base as defined herein, or a tautomeric precursor thereof; and at least one additional epoxy resin curative.

In a fifth aspect, the present invention provides a method for preparing a cured epoxy resin, said method comprising:
a) contacting an epoxy resin with a fluorescent Mannich base as defined herein, or a tautomeric precursor thereof, a fluorescent Mannich base, or a tautomeric precursor thereof, prepared or preparable by the method as defined herein, or a composition as defined herein; and
b) forming a cured epoxy resin.

In a sixth aspect, the present invention provides a cured epoxy resin prepared, or preparable, by the method as defined herein.

In a seventh aspect, the present invention provides a use of a fluorescent Mannich base as defined herein, a fluorescent Mannich base prepared or preparable by the method as defined herein, or a composition as defined herein for causing crosslinking in an epoxy resin.

In an eighth aspect, the present invention provides a method of solubilising a fluorophore having a maximum excitation wavelength of from 380 nm to 750 nm, and a maximum emission wavelength of from 380 nm to 750 nm in a curative composition comprising an epoxy resin hardener, the method comprising attaching at least one Mannich base group to a fluorescent compound comprising the fluorophore and dissolving the resulting compound in said composition.

In a ninth aspect, the present invention provides a use of a fluorescent Mannich base for fluorescently tagging a cured epoxy resin, the use comprising curing an epoxy resin using a fluorescent Mannich base, or a curative composition comprising a fluorescent Mannich base.

### BRIEF DESCRIPTION OF THE FIGURES

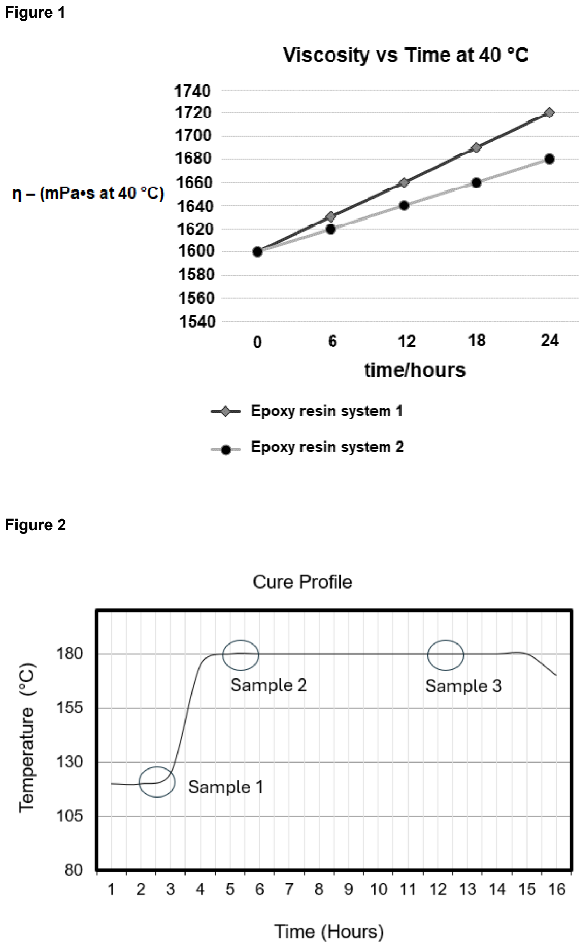

Figure 1 demonstrates the viscosity over time, at 40 °C (η - (mPa•s at 40 °C)), of an epoxy resin system comprising an epoxy resin and a fluorescent Mannich base of the present invention, vs a comparative epoxy resin system comprising an epoxy resin and a comparative known Mannich base curative; and
Figure 2 shows a cure profile experiment used to compare a fluorescent Mannich base of the present invention vs a control curative composition, the curing temperature over time is shown, with samples being taken after 2 hours at 120 °C, after a further 2 hours at 180 °C, and after a further 6 hours at °C.

### DETAILED DESCRIPTION

### Definition of Terms

For the purposes of the present invention, the following terms as used herein shall, unless otherwise indicated, be understood to have the following meanings. Other terms that are not specifically defined below are to be understood as their normal meaning in the art.

The term "hydrocarbyl" as used herein, refers to a monovalent, divalent, or multivalent group, comprising hydrogen and carbon atoms, such as a major proportion (i.e., more than 50 %) of hydrogen and carbon atoms, preferably consisting exclusively of hydrogen and carbon atoms. The hydrocarbyl group may be aromatic, saturated aliphatic or unsaturated aliphatic. The hydrocarbyl group may be entirely aliphatic or a combination of aliphatic and aromatic portions. In some examples, the hydrocarbyl group includes a branched aliphatic chain which is substituted by one or more aromatic groups. Examples of hydrocarbyl groups therefore include acyclic groups, as well as groups that combine one or more acyclic portions and one or more cyclic portions, which may be selected from carbocyclic, aryl and heterocyclyl groups. The hydrocarbyl group includes monovalent groups and polyvalent groups as specified and may, for example, include one or more groups selected from alkyl, alkenyl, alkynyl, carbocyclyl (e.g. cycloalkyl or cycloalkenyl), aryl and heterocyclyl. The hydrocarbyl group may contain one or more heteroatoms, such as oxygen, nitrogen, sulphur, silicon or halogen which may be part of a functional group such as an alcohol, ether, carbonyl, ester, carboxylic acid, carbonate, amide, amine, carbamate, urea, thiol, thioether, thioester, thioacid, thioamide, silane organic halide or heterocycle, the hydrocarbyl group may contain any combination of the above insofar as it is chemically stable. Furthermore, in some embodiments, halogens may entirely replace the hydrogen component of the hydrocarbyl group (i.e. the carbon-bonded hydrogens) to give the corresponding halo-substituted analogue.

The term "alkyl" as used herein refers to a straight- or branched-chain alkyl moiety. Unless specifically indicated otherwise, the term "alkyl" does not include optional substituents. The term "haloalkyl" as used herein refers to an alkyl group substituted with one or more halogen atoms. The term "halogen" as used herein refers to any of fluorine, chlorine, bromine, or iodine.

The term "alkyloxy" as used herein refers to an alkyl group substituted with one or more hydroxy groups or ether groups. The term "alkylamino" as used herein refers to an alkyl group substituted with one or more primary, secondary, or tertiary amine groups.

The term "cycloalkyl" as used herein refers to a saturated aliphatic hydrocarbyl moiety containing at least one ring, wherein said ring has at least 3 ring carbon atoms. The cycloalkyl groups mentioned herein may optionally have alkyl groups attached thereto. Examples of cycloalkyl groups include groups that are monocyclic, polycyclic (e.g., bicyclic) or bridged ring system. Examples of cycloalkyl groups include cyclopropyl, cyclobutyl, cyclopentyl, cyclohexyl and the like. The term "heterocycloalkyl" as used herein refers to a cycloalkyl group wherein the ring contains at least one heteroatom selected from oxygen, nitrogen, and sulphur. Examples of heterocycloalkyl groups include morpholine, piperidine, piperazine and the like.

The term "alkenyl" as used herein refers to a straight- or branched-chain alkyl group containing at least one carbon-carbon double bond, of either E or Z configuration unless specified. The term "alkynyl" as used herein refers to a straight- or branched-chain alkyl group containing at least one carbon-carbon triple bond. Examples of alkenyl groups include ethenyl, 2-propenyl, 1-butenyl, 2-butenyl, 3-butenyl, 1-pentenyl, 2-pentenyl, 3-pentenyl, 1-hexenyl, 2-hexenyl, 3-hexenyl and the like.

The term "aryl" as used herein refers to an aromatic carbocyclic ring system. An example of an aryl group includes a group that is a monocyclic aromatic ring system or a polycyclic ring system containing two or more rings, at least one of which is aromatic. Examples of aryl groups include aryl groups that comprise from 1 to 6 exocyclic carbon atoms in addition to ring carbon atoms. Examples of aryl groups include aryl groups that are monovalent or polyvalent as appropriate. Examples of monovalent aryl groups include phenyl, benzyl, naphthyl, fluorenyl, azulenyl, indenyl, anthryl and the like. An example of a divalent aryl group is 1,4-phenylene.

The term "heteroaryl" as used herein refers to an aromatic heterocyclic ring system wherein said ring atoms include at least one ring carbon atom and at least one ring heteroatom selected from nitrogen, oxygen, and sulphur. Examples of heteroaryl groups include heteroaryl groups that are a monocyclic ring system or a polycyclic (e.g. bicyclic) ring system, containing two or more rings, at least one of which is aromatic. Examples of heteroaryl groups include those that, in addition to ring carbon atoms, comprise from 1 to 6 exocyclic carbon atoms. Examples of heteroaryl groups include those that are monovalent or polyvalent as appropriate. Examples of heteroaryl groups include pyridyl, pyrimidyl, thiopheneyl, isoxazolyl and benzo[b]furanyl groups.

The term "polyamine" as used herein refers to an organic compound having a plurality of amine groups. Preferably the polyamine is an organic compound having a plurality of amine groups having active hydrogens, i.e. one or more primary amines and/or secondary amines, also described herein as "active amine(s)". For the avoidance of doubt, in the context of the present invention a 'diamine' having two amino groups is considered to fall within the scope of a "polyamine", and a 'monoamine' is having one amino group is not considered to fall within the scope of a "polyamine".

The term "monoamine" as used herein refers to an organic compound having one amine group. Preferably the monoamine is an organic compound having one amine group having at least one active hydrogen, i.e. a primary amine or secondary amine, also described herein as a "active amine".

The term "active amine" refers to a primary or secondary amine, having at least one amine N-H bond. An active amine may have one or two substituents, which may contain additional amine groups in its substituents, which may be active amines or tertiary amines.

The term "epoxy resin" as used herein refers to an organic compound having one or more epoxide groups. In the context of the present invention the term "epoxy resin" may be used to refer to a monomeric, or polymeric organic compound, having one or more epoxide groups. An "epoxy resin" may also be referred to in some publications as an "epoxy".

The term "cured epoxy resin" as used herein refers to an organic compound produced by reaction of an "epoxy resin" with a "curing agent", for example by the processes described herein.

The terms "hardener", "curing agent" or "curative" as used herein refers to any species that is capable of causing crosslinking between molecules of epoxy resin, which may also be referred to as hardening or curing the epoxy resin. Causing crosslinking between molecules of epoxy resin, may for example, occur by nucleophilic reaction of the curing agent with epoxide groups present on the epoxy resin such that the curing agent is incorporated into a cured epoxy resin, or for example, a catalytic process whereby the curing agent catalyses polymerisation of the epoxy resin to a cured epoxy resin.

In the context of the present invention, the term "Mannich base" refers to an amine compound prepared or preparable by the Mannich reaction between a nucleophile, an aldehyde (including formaldehyde), and an active amine. A "Mannich base" will comprise at least one "Mannich base group" which is defined herein as an amine group bonded to an SP³ hybridised carbon atom, wherein said SP³ hybridised carbon atom is bonded to the nucleophile used in the Mannich reaction, for example an aromatic ring. Said amine group may be primary, secondary, or tertiary, depending on the active amine used in the Mannich reaction. Said SP³ hybridised carbon atom may be substituted or unsubstituted. In the present invention, the nucleophile is typically an aromatic ring.

In the context of the present invention orbital hybridisation is discussed in terms of SP³ and SP² hybridised atoms. An SP³ hybridised carbon atom is saturated and has four single bonds and thus cannot be part of a conjugated pi system. An SP³ hybridised atom has approximately tetrahedral geometry. Whereas an SP² hybridised carbon atom is unsaturated and has two single bonds and one double bond, and thus may be part of a conjugated pi system. An SP² hybridised atom has approximately trigonal planar geometry. The skilled person is able to determine the orbital hybridisation of an atom based on a chemical formula, such as those defined herein. The same hybridisation nomenclature may also be used to describe p-group heteroatoms, such as oxygen or nitrogen, this would also be understood by the skilled person.

A "tautomer" is a structural isomer of a compound that may readily interconvert with said compound. Various fluorescent molecules have tautomeric forms which are not fluorescent. For example, as would be appreciated, fluorescein exists in three tautomeric forms, a quinoid form, a zwitterionic form, and a spirolactone form, shown below.

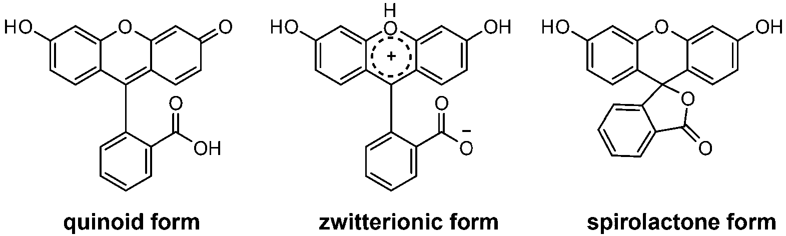

As would be appreciated, the spirolactone form disrupts the conjugated pi system and prevents fluorescence in the visible light spectrum. It will be appreciated that the formulae used herein typically show only one tautomer of the compound, whereas certain compounds may exist in more than one such form. This will be readily apparent to the skilled reader. In some cases, tautomerisation between fluorescent and non-fluorescent forms may be pH dependent. This is the case for phenolphthalein, where a non-fluorescent spirolactone form exists at a pH of from 0 to 8.3. Whereas a fluorescent quinoid form exists at a pH of from 8.3 to 10.

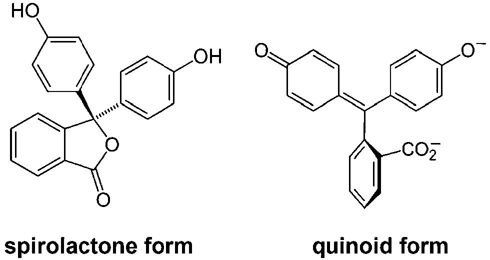

In the context of the present invention the term "tautomeric precursor" refers an isomer of a fluorescent Mannich base as described herein, which may interconvert with said fluorescent Mannich base; and/or a protonated or deprotonated form of a fluorescent Mannich base as described herein, which may be converted to said fluorescent Mannich base upon deprotonation or protonation, respectively. In some cases, multiple protonations or deprotonations may be required to convert the tautomeric precursor into the fluorescent Mannich base. The present invention includes tautomeric precursors to the fluorescent Mannich bases of the invention, including as single tautomeric precursors, or as any mixture of tautomeric precursors and in any ratio. In particular, the existence of a non-fluorescent tautomeric form of a fluorescent Mannich base does not exclude that compound from the scope of the present invention. The present invention provides a fluorescent Mannich base including any non-fluorescent tautomers thereof. As would be appreciated, any non-fluorescent tautomers of fluorescent Mannich bases still find utility in being able to readily interconvert to a fluorescent Mannich base.

As would be appreciated, in some cases positive or negative charge may impact the excitation and emission properties of the conjugated pi system. Various compounds may display fluorescence only as a salt, or only in a neutral form, the same may be true of some fluorescent Mannich base compounds. The compounds of the present invention include any neutral forms as well as any salts thereof, such as acid addition salts or base addition salts. Various commercially available rhodamine dyes are sold as acid addition salts, typically HCl addition salts, such as rhodamine 6G or rhodamine B hydrazide. Fluorescein may exist as the disodium salt, often referred to a sodium fluorescein. Sodium fluorescein is also fluorescent in the visible light region, having a maximum excitation wavelength of 490 nm, and a maximum emission wavelength of 515 nm. As would be appreciated, any non-fluorescent neutral forms or salts of fluorescent Mannich bases still find utility in being able to interconvert to a fluorescent Mannich base.

The present invention relates to a hitherto unknown class of fluorescent Mannich bases, examples of which include Mannich bases derived from fluorescein. The compounds of the present invention are useful as fluorescent curing agents in, for example, epoxy resin systems.

In one aspect, the present invention provides a fluorescent Mannich base for use as an epoxy resin hardener, wherein the fluorescent Mannich base comprises:
i) a fluorophore comprising a conjugated pi system containing at least one aromatic ring, and having a maximum excitation wavelength of from 380 nm to 750 nm, and a maximum emission wavelength of from 380 nm to 750 nm; and
ii) at least one Mannich base group, wherein the Mannich base group is an amine group bonded to an SP3 hybridised carbon atom, wherein said SP³ hybridised carbon atom is bonded to an aromatic ring; and wherein said amine group is bonded to two further groups, neither of which comprising a carboxylic acid or a carboxylic acid ester moiety; or a tautomeric precursor thereof.

The fluorescent Mannich base of the present invention comprises a fluorescent molecule bearing one or more Mannich base groups. The Mannich base groups are bonded to the remainder of the fluorescent molecule via their SP³ hybridised carbon atom and thus do not form part of the conjugated pi system of the fluorophore. Introduction of the Mannich base group, typically by the Mannich reaction, will therefore not be expected to significantly impact the maximum excitation wavelength or maximum emission wavelength of the fluorophore. Thus, the fluorescent Mannich base in question will have similar fluorescence properties as the fluorescent molecule from which it was derived. The concept of introducing Mannich base groups to a fluorescent molecule is therefore applicable to a wide range of fluorescent molecules.

The Mannich base groups include at least one amine group, which make the fluorescent Mannich base suitable for use as an epoxy resin hardener. The compounds of the present invention contain at least one amine group, preferably at least one active amine group. The amine group is capable of causing cross-linking in epoxy resins. Where the amine group is an active amine, i.e. a primary or secondary amine, the active amine can act as a nucleophile to attack the epoxy groups of an epoxy resin such that the curing agent forms a covalent bond to the epoxy resin and is incorporated into a cured epoxy resin. Where the amine group is a tertiary amine group, the tertiary amine group may act as a homo-polymerisation catalyst in an epoxy system and as such may also cause cross-linking in epoxy resins. A compound bearing both active and tertiary amines is therefore also especially well-suited to acting as a curing agent. In the context of the present invention, certain unstable endocyclic nitrogen containing groups, such as benzoxazines may not always be suitable for this purpose.

The amine group which forms part of the Mannich base group is trivalent, i.e. has three bonds, one of which is to the SP³ hybridised carbon atom of the Mannich base group. The amine group therefore has two further bonds. In the case that these further bonds are both to hydrogens, then the amine group of the Mannich base group is a primary amine group. In the case that one of these further bonds is to a hydrogen and the other is to a hydrocarbyl group, then the amine group of the Mannich base group is a secondary amine group. In the case that these further bonds are both to hydrocarbyl groups, then the amine group of the Mannich base group is a tertiary amine group. It is also possible that these further bonds are both bonded to a single hydrocarbyl group forming a cyclic amine group. Neither of the further bonds are to groups which comprise a carboxylic acid or a carboxylic acid ester moiety. This means that any hydrocarbyl group bonded to the amine group of the Mannich base group may not comprise a carboxylic acid or a carboxylic acid ester moiety. This does not preclude a scenario where the fluorophore comprises one or more carboxylic acid or a carboxylic acid ester moiety, as the amine group is bonded to the remainder of the fluorophore via the first bond, and not via either of the two further bonds. However, this does preclude a scenario where the fluorophore comprises one or more carboxylic acid or a carboxylic acid ester moiety, and wherein one of the further bonds form part of a cyclic moiety that connects it back to the fluorophore, and thus the carboxylic acid or carboxylic acid ester moiety. Preferably, neither of the further bonds are to groups which comprise any acidic functional groups (defined as groups having a pKa of less than 14.0 at 25 °C) or any esters thereof.

The amine group which forms part of the Mannich base group may comprise further amine groups in its substituents. This is the case where a polyamine is used in the Mannich reaction. In the case that a monoamine is used in the Mannich reaction, then the amine group which forms part of the Mannich base group will not comprise further amine groups in its substituents. It is preferable that at least one Mannich base group comprises an amine group substituted with at least one further amine, preferably at least one active amine.

It is also preferable, that the amine group of at least one Mannich base group is an active amine, preferably a secondary amine. More preferably, the amine group of each Mannich base group is an active amine, preferably a secondary amine.

The fluorophore comprises a conjugated pi system containing at least one aromatic ring. Although typically, the conjugated pi system will need to contain multiple aromatic rings, or multicyclic rings in order to meet the criteria of having a maximum excitation wavelength of from 380 nm to 750 nm and a maximum emission wavelength of from 380 nm to 750 nm. The conjugated pi system may further comprise one or more alkene groups, alkyne groups, carbonyl groups, imine or iminium groups, hydroxyl groups, amine groups, thiol groups, and/or other heteroatoms or unsaturated functional groups.

The maximum excitation wavelength is the wavelength of light that is most efficiently absorbed by a fluorophore in order to induce excitation. The maximum emission wavelength refers to the wavelength at which a fluorophore emits the most intense light after being excited by an external light source. The maximum absorption wavelength, also known as the absorption peak, is the wavelength at which a molecule absorbs light most efficiently. Generally, both the absorption and excitation spectra and maxima of a sample will peak at the same wavelength, although there are exceptions. Whilst a fluorophore may produce multiple 'local' maxima, the terms maximum excitation wavelength, maximum emission wavelength, and maximum absorption wavelength are understood to refer to the global maxima.

Preferably, the fluorophore has a maximum excitation wavelength of from 400 nm to 700 nm, more preferably from 450 nm to 600 nm. Preferably, the fluorophore has a maximum emission wavelength of from 400 nm to 700 nm, more preferably from 450 nm to 600 nm. Preferably, the maximum excitation wavelength and/or the maximum emission wavelength of the fluorescent Mannich base of the present invention is as measured in aqueous solution.

The fluorophore may be further defined by a maximum absorption wavelength of from 380 nm to 750 nm, preferably from 400 nm to 700 nm, more preferably from 450 nm to 600 nm. Preferably, the maximum absorption wavelength of the fluorescent Mannich base of the present invention is as measured in aqueous solution.

Preferably, the conjugated pi system comprises at least 21 conjugated carbon, oxygen, and/or nitrogen atoms; preferably at least 22 conjugated carbon, oxygen, and/or nitrogen atoms; more preferably at least 24 conjugated carbon, oxygen, and/or nitrogen atoms.

For example, the fluorophore may be selected from an optionally substituted cyanine, coumarin, and triarylmethane dye; preferably an optionally substituted xanthene dye, more preferably an optionally substituted fluorescein or an optionally substituted rhodamine.

Cyanines are a synthetic dye family belonging to the polymethine group. Cyanines include a plurality of carbon-carbon double bonds connecting an amine group to an iminium group and thus include the general structure set out below. The plurality of double bonds and the lone pair of the amine group make up the conjugated pi system of the fluorophore.

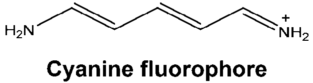

Cyanines may be substituted at the carbon-carbon double bonds, or at the amine and iminium groups, and in particular the nitrogen atoms may be substituted with or included within, cyclic groups, such as aromatic groups, which may be included in the conjugated pi system. The compounds of the present invention require at least one aromatic group in the conjugated pi system. Two examples of cyanine groups including at least one aromatic ring within the conjugated pi system are shown below.

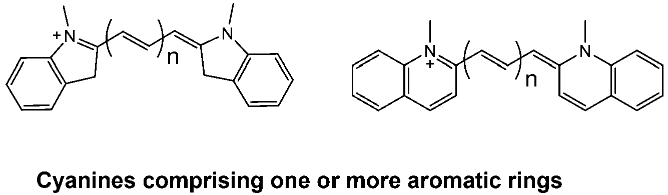

The maximum excitation wavelength and maximum emission wavelength can be adjusted by changing the substituents on the nitrogen and the number of carbon-carbon double bonds. One or more Mannich base group may be attached to said aromatic ring using the Mannich reaction to prepare a fluorescent Mannich base. The carbon-carbon double bonds, nitrogen atoms, and/or aromatic rings may be further substituted.

Coumarin (also referred to as 2H-chromen-2-one) is a fluorescent, aromatic, bicyclic lactone having the following structure.

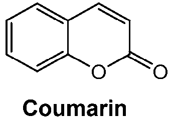

Coumarins may be substituted at any of the carbon atoms. The maximum excitation wavelength and maximum emission wavelength can be adjusted by adding heteroaromatic or unsaturated substituents. One or more Mannich base group may also be attached to said aromatic ring using the Mannich reaction to prepare a fluorescent Mannich base.

Triarylmethane dyes are a family of dyes comprising a central SP² hybridised carbon atom bonded to three aromatic rings, typically benzene rings, although one or more of the aromatic rings may be heteroaromatic or bicyclic, such as pyridine, naphthalene, or indoline. One or more of the aromatic rings may be substituted with functional groups and/or heteroatoms. Typically, one of, two of, or all three of, the aromatic rings are substituted with a heteroatom, such as oxygen or nitrogen, at the position para to the central SP² hybridised carbon atom. Optionally, a bridging atom or group may be present between two of the aromatic rings, typically the bridging atom is an oxygen atom, thus forming an ether group. Alternatively, a direct bond may be present between two of the aromatic rings. The presence of a bridging atom, bridging group, or bridging direct bond will also provide a polycyclic ring, comprising the two bridged rings, the bridging atom or group, and the central a central SP² hybridised carbon atom.

Various triarylmethane dyes exist and may be prepared by synthetic methods known to the skilled person. For example, substitution may occur on the aromatic rings. A non-exhaustive list of examples of such derivatives is given below purely to illustrate the potential diversity of possible triarylmethane dyes.

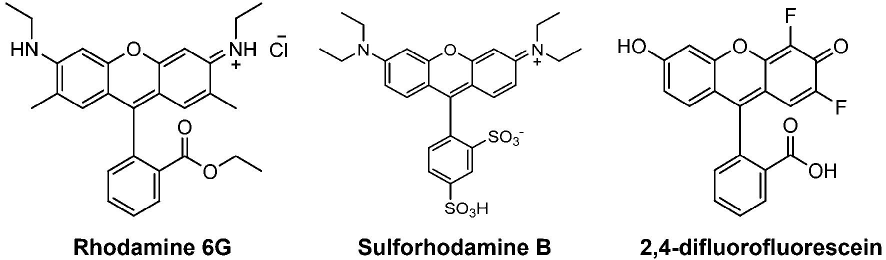

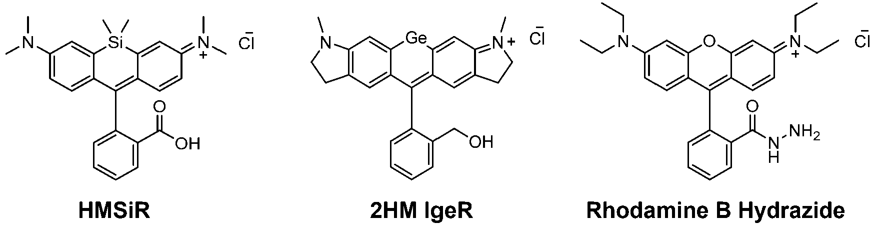

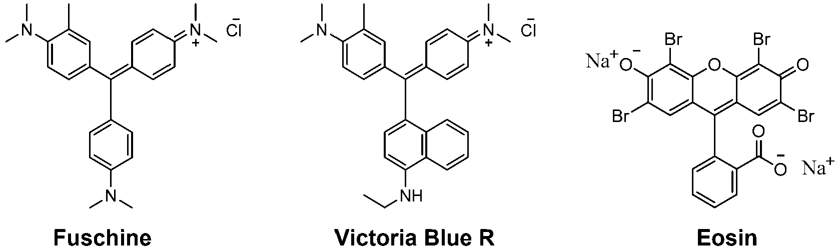

A xanthene dye is a subclass of triarylmethane where at least two of the aryl groups are benzene rings connected by a bridging oxygen atom to form a tricyclic ring known as a xanthene. Fluorescein is a particularly preferable xanthene dye useful in the present invention. The structure of which is given below.

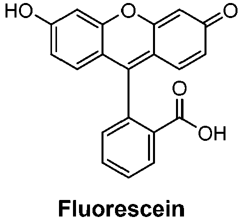

As can be seen, the conjugated pi system of fluorescein comprises a xanthene (10H-9-oxaanthracene) ring substituted with a carbonyl group and a hydroxyl group, as well as an additional benzene ring substituted with a carboxylic acid. All of the carbon and oxygen molecules are contained within the conjugated pi system. Fluorescein has maximum excitation at 498 nm, and a maximum emission wavelength of 517 nm. Various substituted analogues of fluorescein exist which may be substituted at one or more of the aromatic carbon atoms.

Rhodamine is a family of xanthene dye fluorophores, analogous to fluorescein, comprising an amine group and an iminium chloride group in place of the hydroxyl group and carbonyl group. The structure general of a rhodamine given below. 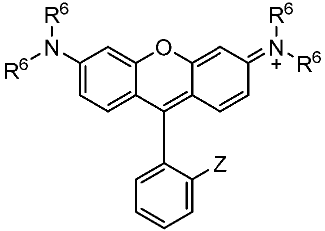 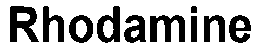 Wherein Z is selected from -H, -COOR⁶, -CONR⁶₂, -S0₂0R⁶, -SO₂NR⁶₂, and - CONHNHR⁶; and wherein each R⁶ is independently selected from -H, and a -C₁ to C₅₀ hydrocarbyl group. A negative counterion will also be present, which is typically a halide, most typically Cl⁻. A rhodamine may also be optionally substituted at one or more of the aromatic carbon atoms.

For example, in Rhodamine B, the Z substituent is -COOH; the -NR⁶₂ substituent is - NEt₂; and the =NR⁶₂⁺ substituent is =NEt₂⁺. The counterion is Cl⁻. The maximum excitation wavelength for rhodamine B is 546 nm and the maximum emission wavelength for rhodamine B is 567 nm.

For example, in Rhodamine 6G, the Z substituent is -COOEt; the -NR⁶₂ substituent is - NHEt; and the =NR⁶₂⁺ substituent is =NHEt⁺. The counterion is Cl⁻. Rhodamine 6G is also substituted with methyl groups at the two positions para to the bridging oxygen. The maximum excitation wavelength for rhodamine 6G is 525 nm and the maximum emission wavelength for rhodamine B is 548 nm.

For example, in Rhodamine 123, the Z substituent is -COOMe; the -NR⁶₂ substituent is - NH₂; and the =NR⁶₂⁺ substituent is =NH₂⁺. The counterion is Cl⁻. The maximum excitation wavelength for rhodamine 123 is 511 nm and the maximum emission wavelength for rhodamine B is 543 nm.

An aromatic group of the conjugated pi system is a suitable nucleophile for the Mannich reaction. Fluorescent compounds containing one or more aromatic groups, such as cyanines, coumarins, triarylmethane dyes, or xanthene dyes are particularly suitable nucleophiles for use in the Mannich reaction in order to yield compounds of the present invention. Additionally, any substituents on the one or more aromatic group which have activating effect on the aromatic ring are particularly preferred. Activating groups are substituents that increase the nucleophilicity of unsubstituted positions on the ring system. Unless specified otherwise, the term activating group herein refers to any substituent that increases the reactivity of the ring towards electrophilic aromatic substitution. Examples of substituents that act as activating groups and electrophilic aromatic directing groups are listed below in Table 1, wherein R is a hydrocarbyl group, for example a -C₁ to C₅₀ hydrocarbyl group.

**Table 1: activating and electrophilic aromatic directing groups**

| **Group** | **Structure** | **Activating and Directing Strength** |
|---|---|---|
| Amine | -NR₂ | Strong |
| Hydroxyl | -OH | Strong |
| Alkoxy | -OR | Strong |
| Acyloxy | -O(CO)R | Moderate |
| Acylamido | -NR(CO)R | Moderate |
| Thiol | -SH | Moderate |
| Alkylthio | -SR | Moderate |
| Phosphine | -PR₂ | Moderate |
| Aryl | -Ar | Weak |
| Alkynyl | -C≡CR | Weak |
| Vinyl | -CR=CR₂ | Weak |
| Alkyl | -CR₃ | Weak |
| Silyl | -SiR₃ | Weak |

Amine groups and hydroxyl groups are strongly activating and also contain lone pairs which allow these groups to contribute to the conjugated pi system of an aromatic group to which they are bonded. Preferably, the conjugated pi system comprises at least one hydroxyl or amine group; more preferably the conjugated pi system comprises at least one hydroxyl or amine group, and further comprises at least one carbonyl or imine group. As would be appreciated, some functional groups may interconvert depending on resonance form, such as hydroxyl groups and carbonyl groups, or amine groups and imine groups. Where a pi system is described as comprising, for example, a hydroxyl group, amine group, carbonyl group, imine group, or any other functional group, it is sufficient that at least one resonance form of said compound comprises said group.

The compound of the present invention must comprise at least one Mannich base group, however it is preferable that the compound comprises at least two Mannich base groups, more preferably the compound comprises at least three Mannich base groups.

Many substituted analogues of the fluorescent compounds described above are commercially available and may be prepared by methods known to the skilled person. Further substituents may be added to the fluorescent compounds described above, prior to, after, or during the Mannich reaction to form the fluorescent Mannich base. One particularly useful example is the addition of one or more additional aromatic groups. This is useful because the additional aromatic group provides additional nucleophilic sites at which further Mannich base group may be attached. In order to avoid changing the nature of the conjugated pi system, and thus potentially undesirably changing the maximum excitation wavelength and maximum emission wavelength of the fluorophore, the additional aromatic group may be bonded to the fluorophore via an SP³ hybridised carbon atom. This prevents the additional aromatic group from contributing to the conjugated pi system of the fluorophore. The additional aromatic group may be added via condensation reaction with an aldehyde. The condensation reaction between the aldehyde, the aromatic ring of the fluorescent compound, and additional aromatic group will yield the fluorescent compound bonded to an SP³ hybridised carbon atom, wherein said SP³ hybridised carbon atom is bonded to an additional aromatic group. Multiple additional aromatic groups may be added in this fashion.

Preferably, the additional aromatic group is a benzene ring, more preferably the additional aromatic group is a phenol group, i.e. a benzene ring substituted with a hydroxyl group. The additional aromatic group may be substituted, and wherein the additional aromatic group is a phenol group, the phenol group may be further substituted, including with additional hydroxyl groups. Substitution of the one or more additional aromatic groups with one or more activating group is also desirable in order to activate the one or more additional aromatic groups towards nucleophilic aromatic substation.

Purely to illustrate the concept of adding an additional aromatic group to a fluorescent compound, an example of a structure is given below wherein a phenol group has been added to a fluorescein by condensation reaction with a formaldehyde.

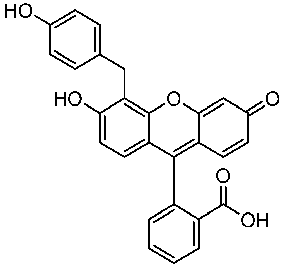

As can be seen from this structure, the conjugated pi system of the additional aromatic group is separated from that of the fluorescein derived fluorophore by an SP³ hybridised carbon atom. In this case the SP³ hybridised carbon atom is not otherwise substituted i.e. is substituted with hydrogen atoms. Substitution on this SP³ atom is typically defined by the choice of aldehyde used in the condensation reaction. A group present on the aldehyde will be retained on the SP³ hybridised carbon atom.

Where the additional aromatic group is phenol, it will typically be bonded to the SP³ carbon atom at the 2-, 4-, or 6-, (ortho or para) position relative to the phenolic hydroxyl group.

Where one or more additional aromatic group is present, the fluorescent Mannich base comprises an aromatic group, preferably a phenol group, having a bond to an SP³ hybridised carbon atom, wherein said SP³ hybridised carbon atom is bonded to an aromatic ring comprised within the fluorophore; and wherein said phenolic group is further substituted with one or more Mannich base group wherein said Mannich base group is defined as an amine group having one bond to an SP³ hybridised carbon atom, wherein said SP³ hybridised carbon atom is bonded to said phenolic group; and wherein said amine group is bonded to two further groups, neither of which comprising a carboxylic acid or a carboxylic acid ester moiety. Preferably, said phenolic group is further substituted with two Mannich base groups.

In a second aspect, the invention provides fluorescent Mannich base of formula (1), a salt thereof: 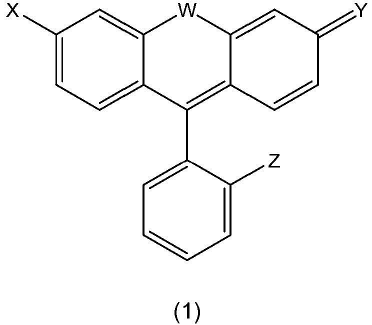
wherein the fluorescent Mannich base of formula (1) is substituted with one or more A substituents, wherein each A substituent is bonded to an aromatic carbon atom;
wherein each A substituent is independently of formula (A1) or (A2): 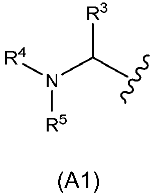 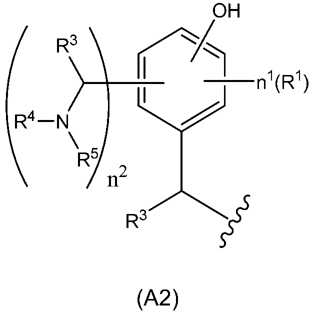
wherein - represents the point of attachment of the A substituent to the fluorescent Mannich base of formula (1):
   optionally wherein the fluorescent Mannich base is substituted with one or more R¹ group, wherein each R¹ group is bonded to an aromatic carbon atom;
   wherein each R¹ is independently selected from: -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, and -I;
   each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino;
   wherein W is selected from -O-, -SO₂-, SiMe₂-, -CO-, and -PO₂-, a direct bond, or wherein W is absent;
   wherein X is selected from -OR⁶ and -NR⁶_{2;}
   wherein Y is selected from =O, =NR⁶, and =NR⁶₂⁺;
   wherein Z is selected from -H, -COOR⁶, -CONR⁶₂, -S0₂0R⁶, -SO₂NR⁶₂, and - CONHNHR⁶;
   wherein each R³ is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl; wherein each R³ is optionally substituted with one or more groups selected from -C₁ to C₁₀ alkyl, -C₁ to C₁₀ haloalkyl, -C₁ to C₁₀ alkoxy, -OH, and =O;
   wherein each R⁴ is independently selected from: -H, and -C₁ to C₁₀₀ hydrocarbyl group;
   wherein each R⁵ is independently selected from: -H, and -C₁ to C₁₀₀ hydrocarbyl group; wherein each R⁴ and R⁵ bonded the same nitrogen atom may be taken together to form a -C₃ to C₁₀₀ hydrocarbyl group;
   with the proviso that none of the R⁴ or R⁵ groups comprises a carboxylic acid or a carboxylic acid ester;
   each R⁶ is independently selected from -H, and a -C₁ to C₅₀ hydrocarbyl group;
   wherein each n¹ is independently from 0 to 3;
   wherein each n² is independently 1 or 2; and
   with the proviso that n¹ + n² for each individual A2 substituent is from 1 to 4;
      or a tautomeric precursor thereof.

The fluorescent Mannich base of formula (1) is substituted with one or more A substituents, for example, 1 to 4 A substituents, preferably 1 or 2 A substituents. Each A substituent is independently of formula (A1) or (A2), for example each A substituent may be of the formula (A1), each A substituent may be of the formula (A2), or a combination of (A1) and (A2) substituents may be present.

Each A substituent is bonded to an aromatic carbon atom via its SP³ hybridised carbon atom. This means that each A substituent, where present, will replace an aromatic hydrogen in the compound of formula (1). Whilst an A substituent may be present at any aromatic carbon, substituted with a hydrogen atom in the compound of formula (1), typically only the more activated aromatic rings will be substituted with A substituents, as the Mannich reaction more readily takes place on activated aromatic rings, for example, it is preferable that each A substituent is bonded to an aromatic carbon atom on the aromatic ring substituted by -X, or an aromatic carbon atom on the aromatic ring substituted by =Y. Preferably, one or more A substituents will be present at ring positions that are activated, for example, it is preferable that each A substituent is at a position ortho to -X or =Y. As would be appreciated, -X and =Y are activating groups, or at least have a resonance form which is an activating group.

The (A1) substituent can be considered a Mannich base group as it comprises an amine group bonded to the remainder of the fluorescent molecule via a SP³ hybridised carbon atom. The SP³ hybridised carbon atom is bonded to an R³ group, which is typically derived from the aldehyde used in the Mannich reaction. The amine is substituted with an R⁴ and an R⁵ group which are typically derived from the active amine used in the Mannich reaction. The amine of the (A1) substituent provides functionality that can react with epoxy resins, thus allowing the compound of formula (1) to act as an epoxy resin hardener.

The (A2) substituent can be considered an additional aromatic group bonded to the fluorophore via an SP³ hybridised carbon atom, wherein the additional aromatic group is a phenolic group. The phenolic group may be introduced by condensation reaction with an aldehyde as discussed above in relation to the additional aromatic group. The phenolic group is substituted with 1 or 2 Mannich base groups. These Mannich base groups are the same as those of the (A1) substituent and comprise an amine group bonded to the phenolic group via a SP³ hybridised carbon atom. These groups may be introduced via the Mannich reaction, as with the (A1) substituents. The phenolic group is also optionally substituted with 0 to 3 R¹ groups, preferably 0 to 2 R¹ groups, more preferably 0 to 1 R¹ groups, most preferably 0 R¹ groups. The total number of Mannich base groups and R¹ groups on each phenolic group may be no more than 4, as this is the maximum number of available positions. Various substituted phenolic compounds suitable for use in preparing the compound of formula (1) are commercially available and would be preparable by the skilled person. The amines of the Mannich base groups of the (A2) substituent also provide functionality that can react with epoxy resins, thus allowing the compound of formula (1) to act as an epoxy resin hardener. Therefore at least one A substituent must be present. Preferably, the fluorescent Mannich base is substituted with at least one (A2) substituent.

Each amine group present on the (A1) and/or (A2) substituent is substituted with one R⁴ group and one R⁵ group. Each R⁴ is independently selected from: -H, and -C₁ to C₁₀₀ hydrocarbyl group. Each R⁵ is independently selected from: -H, and -C₁ to C₁₀₀ hydrocarbyl group. Each R⁴ and R⁵ bonded the same nitrogen atom may be taken together to form a -C₃ to C₁₀₀ hydrocarbyl group. The nature of the R⁴ and R⁵ group are defined by the active amine used in the Mannich reaction. None of the R⁴ or R⁵ groups comprise a carboxylic acid or a carboxylic acid ester.

Preferably, at least one of R⁴ or R⁵ on at least one Mannich base group is a hydrogen, such that the amine of at least one Mannich base group is a secondary amine. More preferably at least one of R⁴ or R⁵ on each Mannich base group is a hydrogen, such that the amine of each Mannich base group is a secondary amine. Preferably, each R⁴ is independently selected from: -H, -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyloxy, -C₁ to C₂₀ alkylamino, -C₆ to C₂₀ aryl, and C₂ to C₂₀ heteroaryl; more preferably: -H, -C₁ to C₂₀ alkyl, -C₃ to C₂₀ cycloalkyl, -C₂ to C₂₀ alkenyl, and -C₁ to C₂₀ alkylamino. Preferably, each R⁵ is independently selected from: -H, -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyloxy, -C₁ to C₂₀ alkylamino, -C₆ to C₂₀ aryl, and C₂ to C₂₀ heteroaryl; more preferably: -H, -C₁ to C₂₀ alkyl, -C₃ to C₂₀ cycloalkyl, -C₂ to C₂₀; alkenyl, and -C₁ to C₂₀ alkylamino.

The phenolic group is substituted with a hydroxyl group (although the phenolic group may also be substituted with further groups, including more hydroxyl groups in the form of R¹ groups). Typically, the condensation reaction which attached the phenolic group to the aromatic ring of the fluorophore, and/or the Mannich reaction which attached the Mannich base group to the phenolic group will occur at the positions ortho, or para (2-, 4, and/or -6) relative to the hydroxyl group. Although this may change depending on, for example, the presence of any other substituents on the phenolic group.

Typically, each A2 substituent is of the formula (A2i) or (A2ii):

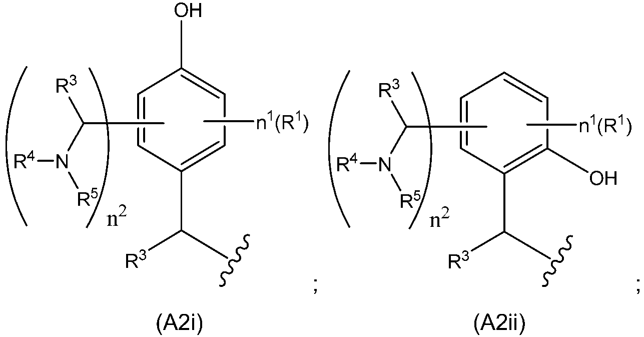

Preferably each A2 substituent is of the formula (A2iii), (A2iv), (A2v), or (A2vi):

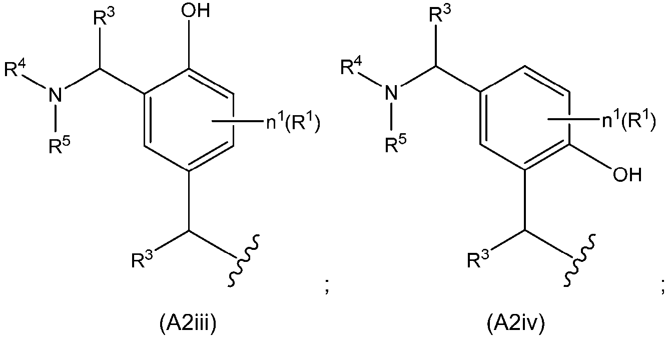

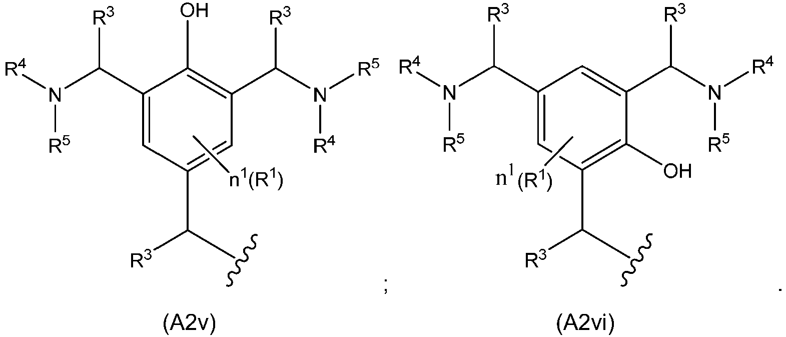

The R³ group, where present on a SP³ hybridised carbon atom of a Mannich base group, or where present on a SP³ hybridised carbon atom which connects the phenolic group to the fluorophore will be derived from the aldehyde used in the Mannich reaction, or the condensation reaction, respectively. Each R³ is independently selected from: -H, - C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl; wherein each R³ is optionally substituted with one or more groups selected from -C₁ to C₁₀ alkyl, -C₁ to C₁₀ haloalkyl, - C₁ to C₁₀ alkoxy, -OH, and =O.

Preferably, each R³ is independently selected from: -H, -C₁ to C₁₀ alkyl, -C₃ to C₁₂ cycloalkyl, -C₂ to C₁₀ alkenyl, -C₆ to C₁₂ aryl, and -C₃ to C₁₂ heteroaryl; wherein each R³ is optionally substituted with one or more groups selected from -C₁ to C₁₀ alkyl, -C₁ to C₁₀ haloalkyl, -C₁ to C₁₀ alkoxy, -OH. More preferably, each R³ is independently selected from: -H, -C₁ to C₁₀ alkyl, -C₆ to C₁₂ aryl, and -C₃ to C₁₂ heteroaryl. Most preferably, each R³ is independently selected from: -H or furanyl.

Optionally the compound of formula (1) may be substituted with one or more R¹ group, wherein each R¹ group is bonded to an aromatic carbon atom. As with the A substituents, one or more R¹ substituent may be bonded to an aromatic carbon atom of the compound of formula (1). This means that each such an R¹ substituent, where present, will replace an aromatic hydrogen in the compound of formula (1). R¹ substituents may be bonded to the aromatic carbon atoms of the core scaffold, i.e. the fluorophore, and/or any additional aromatic group present, such as a phenolic group. Various substituted xanthene dyes suitable for use in preparing the compound of formula (1) are commercially available and would be preparable by the skilled person.

Each R¹ group is independently selected from: -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, and -I.

Preferably each R¹ group is independently selected from: -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyloxy, - C₁ to C₂₀ alkylamino, -OH, -OR², -NH₂, -NHR², -NR²₂, -F, -Cl, -Br, and -I: and each R² is independently selected from: -C₁ to C₂₀ alkyl, -C₁ to C₂₀ haloalkyl, -C₃ to C₂₀ cycloalkyl, - C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino.

More preferably, each R¹ group is independently selected from: -C₁ to C₁₀ alkyl, -C₁ to C₁₀ haloalkyl, -C₃ to C₁₀ cycloalkyl, -C₂ to C₁₀ alkenyl, -C₂ to C₁₀ alkynyl, -C₁ to C₁₀ alkyloxy, -C₁ to C₁₀ alkylamino, -OH, -OR², -NH₂, -NHR², -NR²₂, -F, -Cl, -Br, and -I: and each R² is independently selected from: -C₁ to C₁₀ alkyl, -C₁ to C₁₀ haloalkyl, -C₃ to C₁₀ cycloalkyl, -C₂ to C₁₀ alkenyl, -C₂ to C₁₀ alkynyl, -C₁ to C₁₀ alkoxy, and -C₁ to C₁₀ alkylamino.

Even more preferably each R¹ group is independently selected from: -C₁ to C₁₀ alkyl, - OH, -OR², -NH₂, -NHR², -NR²₂, -F, -Cl, -Br, and -I: and each R² is independently selected from: -C₁ to C₁₀ alkyl.

The W group is a bridging atom or group between two benzene rings of the fluorophore. W is selected from -O-, -SO₂-, SiMe₂-, -CO-, and -PO₂-, and a direct bond. Preferably W is -O-. Alternatively, W is absent and no bridging atom or group is present between the two benzene rings of the fluorophore.

X and Y are both heteroatom containing functional groups. X is selected from -OR⁶ and - NR⁶₂; and Y is selected from =O, =NR⁶, and =NR⁶₂⁺. As would be appreciated, X is depicted as singly bonded to the fluorophore, and Y as doubly bonded to the fluorophore, however resonance forms of such compounds may exist where Y is singly bonded to the fluorophore, and Y is doubly bonded to the fluorophore. In such cases the nature of X and Y may change, for example, if X is -OH and Y is =O, a resonance form of such a compound may exist where X is =O and Y is -OH. The scope of formula (1) encompasses such resonance forms. In one example, X is -OR⁶, and wherein Y is =O; preferably wherein X is -OH. Alternatively, X is -NR⁶₂, and wherein Y is =NR⁶₂⁺. Preferably, X is selected from -NH₂, -NHMe, -NHEt, -NMe₂, -NMeEt, and -NEt₂ and Y is selected from =NH, =NMe, =NEt, =NH₂⁺, =NHMe⁺, =NHEt⁺, =NMe₂⁺, =NMeEt⁺, and =NEt₂⁺. More preferably wherein X is -NH₂, and wherein Y is =NH₂⁺.

Z is a substituent found on the ortho position of the monocyclic benzene ring in many triarylmethane dyes. Z is selected from: -H, -COOR⁶, -CONR⁶₂, -S0₂0R⁶, -SO₂NR⁶₂, and -CONHNHR⁶. Typically, Z is -COOR⁶, preferably Z is -COOH. Z is typically, a deactivating group and as such, typically A substituents are not found on the ring bearing the Z substituent. Although this is still possible to achieve using harsher reaction conditions.

Each R⁶ group is independently selected from -H, and a -C₁ to C₅₀ hydrocarbyl group. Preferably, each R⁶ group is selected from -H, and -C₁ to C₁₀ alkyl.

In a specific example, a fluorescent Mannich base of formula (1) may be prepared from fluorescein. In this example, W is -O-, X is -OH, Y is =O, and Z is -COOH. Whilst fluorescein analogues substituted with one or more R¹ groups may also be used and are commercially available or preparable by the skilled person, in this example, the fluorophore is not substituted with R¹ groups. The nature of the aldehyde and active amine used in the Mannich reaction is not particularly limited, although some specific examples of suitable amines are given below. Additionally, (A2) substituents may or may not be present.

In another specific example, a fluorescent Mannich base of formula (1) may be prepared from a rhodamine. Similarly, rhodamine analogues substituted with one or more R¹ groups may also be used and are commercially available or preparable by the skilled person.

Preferably, the fluorescent Mannich base of formula (1) has a maximum excitation wavelength of from 380 nm to 750 nm and/or a maximum emission wavelength of from 380 nm to 750 nm. More preferably the fluorophore has a maximum excitation wavelength of from 400 nm to 700 nm, even more preferably from 450 nm to 600 nm. More preferably, the fluorophore has a maximum emission wavelength of from 400 nm to 700 nm, even more preferably from 450 nm to 600 nm. The fluorescent Mannich base of formula (1) may be a fluorescent Mannich base of the first aspect.

In a third aspect, the present invention provides a process for preparing a fluorescent Mannich base, or a tautomeric precursor thereof, as described herein, the process comprising performing a Mannich reaction using:
i) a fluorescent compound comprising a conjugated pi system containing at least one aromatic ring, or a tautomeric precursor thereof;
ii) an active amine; and
iii) an aldehyde;
wherein the active amine does not comprise a carboxylic acid or a carboxylic acid ester group.

Optionally, the process is a process for preparing a fluorescent Mannich base of formula (1) or any of the embodiments described in relation thereto, or a tautomeric precursor thereof. In some cases, a tautomeric precursor of the fluorescent compound comprising a conjugated pi system containing at least one aromatic ring may be used in this process, and the resulting compound may be converted into a fluorescent Mannich base via tautomerisation, protonation or deprotonation.

Preferably the active amine ii) is a secondary amine. Preferably, the molar ratio of the aldehyde iii) to the amine ii) is less than 2 : 1, preferably less than 1.5 : 1, more preferably 1.2 : 1, most preferably 1 : 1. Either of these modifications to the reaction will preclude the formation of undesirable cyclic compounds, such as benzoxazines.

Preferably, the Mannich reaction further comprises: iv) an optionally substituted additional aromatic compound. Preferably, the optionally substituted additional aromatic compound is an optionally substituted phenolic compound, more preferably the optionally substituted phenolic compound is selected from phenol, resorcinol, guaiacol, cardanol, and phloroglucinol, most preferably phenol. The optionally substituted additional aromatic compound may undergo a condensation reaction with the aldehyde and an aromatic ring of the fluorescent compound comprising a conjugated pi system containing at least one aromatic ring, as described above.

Any suitable fluorescent compound may be used, for example, an optionally substituted cyanine, coumarin, and triarylmethane dye; preferably an optionally substituted xanthene dye. Preferably, the fluorescent compound comprising a conjugated pi system containing at least one aromatic ring is selected from fluorescein, a halogenated analogue of fluorescein, a rhodamine, or a tautomer and/or salt thereof, most preferably fluorescein.

Any suitable aldehyde may be used, for example, an alkyl aldehyde, aryl aldehyde, heteroaryl aldehyde, or aldehyde with multiple functionalities. Preferably, the aldehyde is formaldehyde or furfural, and where the aldehyde is formaldehyde the formaldehyde is optionally introduced to the reaction in the form of a paraformaldehyde.

Any suitable active amine, including ammonia, may be used. It is advantageous that the active amine comprises at least two active amine groups. As would be appreciated, one active amine is required in order to undergo the Mannich reaction, and this active amine may be primary or secondary. A second active amine is useful for further reaction to take place. The further active amine may be useful for reacting with the epoxy groups of epoxy resins, for causing crosslinking in an epoxy resin. Alternatively, the active amine may comprise one or more additional active amine groups which are protected by a suitable protecting group, which may subsequently be deprotected to provide one or more additional active amine groups on the fluorescent Mannich base. Such protecting group strategy is within the capability of the skilled person.

Suitable active amines may be selected from: 1) an aliphatic primary di- or tri-amine; preferably an ether-group-containing aliphatic primary di- or tri-amine; 2) an aliphatic secondary amino-containing tri-amine having two primary aliphatic amino groups; 3) a polyamine having one or two secondary amino groups, preferably products of the reductive alkylation of primary aliphatic polyamines with aldehydes or ketones; or 4) an aromatic polyamine.

Suitable active amines may be selected from: Dimethylaminopropylamine (DMAPA), 2,2-dimethyl-1,3-propanediamine, 1,3-pentanediamine (DAMP), 1,5-pentanediamine, 1,5-diamino-2-methylpentane (MPMD), 2-butyl-2-ethyl-1, 5-pentanediamine (C11-nododiamine), 1,6-hexanediamine, 2,5-dimethyl-1,6-hexanediamine, 2,2 (4), 4-trimethylhexamethylenediamine (TMD), 1,7-heptanediamine, 1, 8-octanediamine, 1,9-nonanediamine, 1,10-decanediamine, 1,11-undecandiamine, 1,12-dodecanediamine, 1,2-,1,3- or 1,4-diaminocyclohexane, bis(4-aminocyclohexyl) methane (H 12-MDA), bis(4-amino-3-methylcyclohexyl) methane, bis(4-amino-3-ethylcyclohexyl) methane, bis(4-amino-3,5-dimethylcyclohexyl) methane, bis(4-amino-3-ethyl-5-methylcyclohexyl) methane, 1-amino-3-aminomethyl-3,5,5-trimethylcyclohexane (isophoronediamine or IPDA), 2- or 4-methyl-1,3-diaminocyclohexane or mixtures thereof, 1,3-bis(aminomethyl) cyclohexane, 1,4-bis(aminomethyl) cyclohexane, 2,5 (2,6)-bis(aminomethyl) bicyclo [2.2.1] heptane (NBDA), 3(4), 8(9)-Bis(aminomethyl) tricyclo [5.2. 1.02 '6] decane, 1,4-diamino-2,2,6-trimethylcyclohexane (TMCDA), 1,8-Me N-thandiamin, 3,9-bis(3-aminopropyl)-2,4,8,10-tetraoxaspiro [5.5] undecane, 1,3-bis(aminomethyl) benzene (MXDA), 1, 4-bis(aminomethyl) benzene, and combinations thereof; or wherein the polyamine is an aliphatic primary triamine selected from 4-aminomethyl-1,8-octanediamine, 1,3,5-tris(aminomethyl) benzene, 1,3,5-tris(aminomethyl) cyclohexane, tris(2-aminoethyl) amine, tris(2-amino-propyl) amine, tris(3-aminopropyl) amine and combinations thereof.

Suitable active amines may be selected from: ether-group-containing aliphatic primary di-amines. Suitable ether-group-containing aliphatic primary di-amines include those selected from: bis (2-aminoethyl) ether, 3,6-dioxaoctane-1,8-diamine, 4,7-dioxadecane-1, 10 diamine, 4,7-dioxadecane-2,9-diamine, 4,9-dioxadodecane-1,12-diamine, 5,8-dioxadodecane-3,10-diamine, 4,7,10-trioxatridecan-1,13-diamine, or oligomers of any of the foregoing; polytetrahydrofurandiamines, such as bis(3-aminopropyl) polytetrahydrofurans, cycloaliphatic diamines containing ether groups preferably derived from propoxylation and subsequent amination of 1,4-dimethylol cyclohexane (for example, available as Jeffamine (RTM) particular RFD 270 (Huntsman)), and polyoxyalkylenediamines, such as polyoxypropylenediamines, preferably derived from amination of polyoxyalkylenediols, for example, those available under the name Jeffamine (RTM) (from Huntsman), under the name polyetheramine (from BASF) or under the name PC amine (RTM) (from Nitroil). In particular, suitable polyoxyalkylene di- or triamines are Jeffamine (RTM) D-230, Jeffamine (RTM) D-400, Jeffamine (RTM) D-2000, Jeffamine (RTM) EDR-104, Jeffamine (RTM) EDR-148, Jeffamine (RTM) EDR-176, Jeffamine (RTM) T-403, Jeffamine (RTM) T-3000, Jeffamine (RTM) T-5000, or the corresponding amines by BASF or Nitroil.

Suitable active amines may be selected from: ether-group-containing aliphatic primary tri-amines. Suitable ether-group-containing aliphatic primary tri-amines include polyoxyalkylenetriamines, preferably derived from amination of polyoxyalkylenetriols.

Suitable active amines may be selected from aliphatic secondary amino-containing tri-amines having two primary aliphatic amino groups, including: 3-(2-aminoethyl) aminopropylamine, bis(hexamethylene) triamine (BHMT), diethylenetriamine (DETA), triethylenetetramine (TETA), tetraethylenepentamine (TEPA), pentaethylenehexamine (PEHA) or higher homologs of linear polyethyleneamines such as polyethylenepolyamine with 5 to 7 ethylenepolyamine units (HEPA), products of the multiple cyanoethylation or cyanobutylation and subsequent hydrogenation of primary polyamines having at least two primary amino groups, such as Dipropylenetriamine (DPTA), N-(2-aminoethyl)-1,3-propanediamine (N3-amine), N,N'-bis(3-aminopropyl) ethylenediamine (N4-amine), N,N'-bis (3-aminopropyl)-1,4-diaminobutane, N5-(3-aminopropyl)-2-methyl-1,5-pentanediamine, N3-(3-aminopentyl)-1,3-pentanediamine, N5-(3-Amino-1-ethyl-propyl)-2-methyl-1,5-pentanediamine, N,N'-bis (3-amino-1-ethylpropyl)-2-methyl-1,5-pentanediamine, and combinations thereof.

Suitable active amines may be selected from polyamines having one or two secondary amino groups. Suitable polyamines having one or two secondary amino groups include: N¹-benzyl-1,2-propanediamine, N¹-(4-methoxybenzyl)-1,2-propanediamine, N-benzyl-1,3-bis (aminomethyl) benzene, N,N'-Dibenzyl-1,3-bis (aminomethyl) benzene, N-2-ethylhexyl-1,3-bis (aminonyl) benzene, N,N'-bis(2-ethylhexyl)-1,3-bis(aminomethyl) benzene, and partially styrenated polyamines, such as partially styrenated 1,3-bis(aminomethyl) benzene (MXDA) (available from Mitsubishi gas Chemical).

Suitable active amines may be selected from aromatic polyamines. Suitable aromatic polyamines include m- and p-phenylenediamine, 4,4'-, 2,4'- and/or 2,2'-diaminodiphenylmethane, 3,3'-dichloro-4,4'-diaminodiphenylmethane (MOCA) diisocyanate, 2,4- and / or 2,6-toluene diamine (available as Ethacure 300 from Albemarle (RTM)), mixtures of 3,5-dimethylthio-2,4- and -2,6-toluene diamine, mixtures of 3,5-diethyl -2,4- and -2,6-toluylenediamine (DETDA), 3,3',5,5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5,5'-dimethyl-4,4'-diaminodiphenylmethane (M-MIPA), 3,3',5,5'-tetraisopropyl-4,4'-diaminodiphenylmethane (M-DIPA), 4,4'-diamino diphenylsulfone (DDS), 4-amino-N-(4-aminophenyl) benzenesulfonamide, 5,5'-methylenedianthranilic acid, dimethyl (5,5'-methylenedithethranilate), 1,3-propylenebis(4-aminobenzoate), 1,4-butylenebis(4-aminobenzoate), polytetramethyleneoxide-bis(4-aminobenzoate), 1,2-bis(2-aminophenylthio)ethane, 2-methylpropyl (4-chloro-3,5-diaminobenzoate), t-Butyl (4-chloro-3,5-diaminobenzoate), and combinations thereof.

The amines described above can also be adducted with epoxides or epoxy resins and further modification may be possible with fatty acids to form amido or polyamides. Optionally, said polyamine further comprises amido or polyamide functional groups derived from adduction of the polyamine with one or more epoxides and/or modification with one or more fatty acids.

Typically, the reaction temperature is maintained at at least 40 °C, preferably at least 50 °C, more preferably at least 60 °C, even more preferably at least 70 °C, even more preferably at least 80 °C, even more preferably at least 90 °C, even more preferably at least 100 °C, even more preferably at least 110 °C, most preferably at least 120 °C.

Any suitable solvent may be used, or alternatively no solvent is used. The fluorescent compound comprising a conjugated pi system containing at least one aromatic ring may be added neat or in solution, such as aqueous solution. As would be appreciated, water is produced in the Mannich reaction and a condensation reaction, the skilled person is capable of various method of removing the water of reaction, for example, atmospheric distillation.

Typically, the molar ratio of the active amine to the aldehyde is 1 : 1, or ranging from 1 : 10 to 10 : 1, preferably from 1 : 5 to 5 : 1, more preferably from 1: 2 to 2 : 1, most preferably from 1 : 1.5 to 1.5 : 1.

Typically, the molar ratio of the active amine to the fluorescent compound comprising a conjugated pi system containing at least one aromatic ring, or the aldehyde to the fluorescent compound comprising a conjugated pi system containing at least one aromatic ring will depend on the number of Mannich base groups desired on the fluorescent Mannich base, but will typically be 1 : (1 per Mannich base group desired), but may be from 1 : (3 per Mannich base group desired) to 3 : (1 per Mannich base group desired), preferably from 1 : (2 per Mannich base group desired) to 2 : (1 per Mannich base group desired).

Where one or more optionally substituted additional aromatic compound is used, the molar ratio of the optionally substituted additional aromatic compound to the fluorescent compound comprising a conjugated pi system containing at least one aromatic ring will depend on the number of optionally substituted additional aromatic groups desired on the fluorescent Mannich base, but will typically be 1 : (1 per optionally substituted additional aromatic group desired), but may be from 1 : (3 per optionally substituted additional aromatic group desired) to 3 : (1 per optionally substituted additional aromatic group desired), preferably from 1 : (2 per optionally substituted additional aromatic group desired) to 2 : (1 per optionally substituted additional aromatic group desired).

Where one or more optionally substituted additional aromatic compound is used, the molar ratio of the optionally substituted additional aromatic compound to the aldehyde will typically be 1 : 1, but may be from 1 : 3 to 3 : 1, preferably from 1 : 2 to 2 : 1. However, where one or more optionally substituted additional aromatic compound is used, the aldehyde consumed by the condensation reaction between the optionally substituted additional aromatic compound and the fluorescent compound comprising a conjugated pi system containing at least one aromatic ring will be in addition to the aldehyde consumed by the Mannich reaction. This means that the molar ratio of the total aldehyde to the optionally substituted additional aromatic compound to the amine, will typically be 2 : 1 : 1.

A combination of different amines may be used in order to provide a fluorescent Mannich base with one or more different Mannich base groups. Additionally, a combination of different aldehydes may be used to provide a fluorescent Mannich base with one or more different substituents on the SP³ carbon atoms, for example the R³ substituents on a fluorescent Mannich base of formula (1). A combination of different optionally substituted additional aromatic compounds may also be used to provide a fluorescent Mannich base with one or more different optionally substituted additional aromatic substituents.

Typically, the active amine, and the optionally substituted additional aromatic compound if present, and the fluorescent compound comprising a conjugated pi system containing at least one aromatic ring, are combined in a first step, optionally wherein the fluorescent compound comprising a conjugated pi system containing at least one aromatic ring is added last. The aldehyde may then be added in a second step. Optionally, the first step includes heating, preferably to at least 40 °C, preferably at least 50 °C, more preferably at least 60 °C. Optionally the reaction mixture may be cooled, for example, to 25 °C or lower, prior to addition of the aldehyde. Optionally, the second step includes heating, preferably to at least 40 °C, preferably at least 50 °C, more preferably at least 60 °C, more preferably at least 70 °C, more preferably at least 80 °C, most preferably at least 90 °C. As would be appreciated, the optimum temperature and timings of the various stages of the reaction would depend on the specific starting materials used, as well as any other reaction conditions such as scale, solvent choice, or catalysis etc. A Lewis acid may be used to catalyse the Mannich reaction.

In a fourth aspect, the present invention provides a curative composition comprising the fluorescent Mannich base as defined herein, or a tautomeric precursor thereof; and at least one additional epoxy resin curative.

As sophisticated fluorometers can detect fluorescence at extremely low concentrations, it is not necessary that all of the curative in a curative composition is the fluorescent Mannich base. Fluorescent Mannich bases of the present invention can impart fluorescence properties onto a curative composition, and therefore a cured epoxy resin formed therefrom, even where the fluorescent Mannich base makes up a small proportion of the mass of the curative composition. The fluorescent Mannich base may make up less than 50 % of the total mass of the curatives present in the curative composition, preferably less than 30 %, more preferably, less than 10 %, even more preferably less than 5 %, most preferably less than 1 %.

The at least one additional epoxy resin curative may be an amine, such as a Mannich base, or may be an alternative curing agent, for example, an anhydride, such as methyl tetra hydro-phthalic anhydride.

It has been found that the curative composition may usefully comprise further amine compounds in order to adjust its properties to adapt the composition to a desired purpose. For example, properties such as the viscosity or active hydrogen equivalent weight may be adjusted by the presence of one or more further amine compounds. It has also been usefully found that excess active amine used in the Mannich reaction can be retained to adjust properties of the curative composition without the need for separation. This allows for a more efficient one pot preparation of such compositions. Nevertheless, separation of any excess amine used in the Mannich reaction could be easily achieved by the skilled person, if desired.

Preferably, the curative composition comprises one or more further amine compounds. More preferably, the curative composition further comprises an amine compound having the formula HNR⁴R⁵, wherein R⁴ and R⁵ are as defined in the second aspect, or any embodiments described herein in relation thereto, and are the same as the R⁴ and R⁵ groups, respectively, which are present as amine substituents in the fluorescent Mannich base also comprised within the composition, i.e. wherein the curative composition further comprises an amine compound wherein the amine compound is the amine from which at least one of the Mannich amine groups is derived.

The epoxy resin curative composition may optionally further comprise any amine compound described herein as suitable for use as the first polyamine, and/or the second amine of the method steps described herein.

Any suitable organic solvent may be used as a solvent or diluent in a curative composition of the present invention, for example MeCN, benzene, methanol, ethanol, IPA, butanol, chloroform, DCM, diethyl ether, DMF, dioxane, ethyl acetate, petroleum ether, kerosine, pentane, hexane, heptane, MTBE, NMP, THF, toluene, xylene and mixtures thereof. Benzyl alcohol is a particularly suitable solvent or diluent for fluorescent Mannich base compounds and curative resins thereof of the present invention. As would be appreciated, methods of forming and handling a curative composition from a given compound would be known by the skilled person.

Where necessary, the fluorophore of a tautomeric precursor may be converted into its fluorescent form via tautomerisation, protonation, or deprotonation after curing has taken place.

In a fifth aspect, the present invention provides a method for preparing a cured epoxy resin, said method comprising:
a) contacting an epoxy resin with a fluorescent Mannich base as defined herein, or a tautomeric precursor thereof, a fluorescent Mannich base, or a tautomeric precursor thereof, prepared or preparable by the method as defined herein, or a composition as defined herein; and
b) forming a cured epoxy resin, preferably wherein the epoxy resin is selected from epoxidized novolacs and bisphenols (A or F) or halogenated analogues thereof.

Examples of epoxy-based resins suitable for use in the present invention include polyglycidyl ethers of polyhydric phenols, epoxidised novolacs or similar glycidated polyphenolic resins, glycidated bisphenols, such as glycidated bisphenol A or F, or halogenated (e.g. chlorinated or fluorinated) analogues thereof; polyglycidyl ethers of alcohols, glycols or polyglycols, and polyglycidyl esters of polycarboxylic acids. Preferred examples of epoxy resins are polyglycidyl ethers of a polyhydric phenol. Polyglycidyl ethers of polyhydric phenols can be produced, for example, by reacting an epihalohydrin with a polyhydric phenol in the presence of an alkali. Examples of suitable polyhydric phenols include: 2,2-bis (4-hydroxyphenyl) propane (bisphenol-A); 2,2-bis(4-hydroxy-3-tert-butylphenyl)propane; 1,1-bis(4-hydroxyphenyl) ethane; 1,1-bis(4-hydroxyphenyl) isobutane; bis(2-hydroxy-1-naphthyl) methane; 1,5-dihydroxynaphthalene; 1,1-bis(4-hydroxy-3-alkylphenyl) ethane and the like. Commercial examples of preferred epoxy resins that may be used include EPILOK 60-600 (RTM).

The epoxy resin to which the curative of the present invention is added may include other additives, such as flow control additives, antifoam agents, or anti-sag agents, as well as other additives such as pigments, reinforcing agents, fillers, elastomers, stabilizers, extenders, plasticizers, or flame retardants depending on the application.

The epoxy resin can be any epoxy resin which can be cured by the compound of the present invention. Generally, the epoxy resin can be any curable epoxy resin and may have, for instance, a 1,2-epoxy equivalency greater than one and preferably, on average, more than 1.5 epoxide groups per molecule. The epoxy resin can be saturated or unsaturated, linear or branched, aliphatic, cycloaliphatic, aromatic or heterocyclic, and may be substituted, provided such substituents do not interfere with the curing reaction. Such substituents can include bromine.

Preferably, the method comprises forming a cured epoxy resin at a temperature of no more than 100 °C, more preferably no more than 90 °C, even more preferably no more than 80 °C.

In a sixth aspect, the present invention provides a cured epoxy resin prepared, or preparable, by the method as defined herein.

In a seventh aspect, the present invention provides a use of a fluorescent Mannich base as defined herein, a fluorescent Mannich base prepared or preparable by the method as defined herein, or a composition as defined herein for causing crosslinking in an epoxy resin.

In an eighth aspect, the present invention provides a method of solubilising a fluorophore having a maximum excitation wavelength of from 380 nm to 750 nm, and a maximum emission wavelength of from 380 nm to 750 nm in a curative composition comprising an epoxy resin hardener, the method comprising attaching at least one Mannich base group to a fluorescent compound comprising the fluorophore and dissolving the resulting compound in said composition. Preferably, wherein said fluorescent compound comprising the fluorophore is insoluble in said composition.

Preferably, the fluorophore has a maximum excitation wavelength of from 400 nm to 700 nm, more preferably from 450 nm to 600 nm. Preferably, the fluorophore has a maximum emission wavelength of from 400 nm to 700 nm, more preferably from 450 nm to 600 nm. The fluorophore may be further defined by a maximum absorption wavelength of from 380 nm to 750 nm, preferably from 400 nm to 700 nm, more preferably from 450 nm to 600 nm. Preferably, the maximum excitation wavelength, the maximum emission wavelength, and/or the maximum absorption wavelength of the fluorescent Mannich base of the present invention is as measured in aqueous solution.

Various fluorescent compounds comprising suitable fluorophores, such as fluorescein, are not always soluble in standard epoxy resin curatives. As can be seen in Example 2, neither fluorescein nor the sodium salt of fluorescein is soluble in CURAMINE 36-216 (RTM) or CURAMINE 36-760 (RTM), which are both commercially available phenolic Mannich base epoxy curatives. The fluorophore of fluorescein can be solubilised in these epoxy curatives by attaching one or more Mannich base group to the to the fluorescent compound, this can also be seen in Example 2. This increases the solubility of the fluorescent compound in the curative compound, or composition thereof. This allows for the fluorophore, and thus the fluorescent properties of the fluorophore to be incorporated into the curative or composition thereof. Additionally, the fluorescent Mannich base formed by attaching at least one Mannich base group to the fluorescent compound also acts as a curative.

The fluorescent compound comprising the fluorophore may be any of the suitable fluorescent compounds described in relation to the first aspect. Preferably, the fluorescent compound comprising the fluorophore is fluorescein or a substituted analogue thereof. Alternatively, the fluorescent compound comprising the fluorophore is a rhodamine or a substituted analogue thereof.

Preferably, the method comprises attaching at least two Mannich base group to the fluorescent compound comprising the fluorophore. Preferably, the method further comprises attaching at least one additional aromatic group to the fluorescent compound comprising the fluorophore, more preferably wherein optionally substituted additional aromatic compound is an optionally substituted phenolic compound, more preferably the optionally substituted phenolic compound is selected from phenol, resorcinol, guaiacol, cardanol, and phloroglucinol, most preferably phenol. More preferably, the method further comprises attaching at least one Mannich base group to the optionally substituted additional aromatic compound or substituent derived therefrom.

The curative composition may consist of one or more phenolic Mannich base and/or anhydride curative, may consist essentially of one or more phenolic Mannich base and/or anhydride curative, or may comprise one or more phenolic Mannich base and/or anhydride curative. The curative composition may further comprise one or more further epoxy resin curative, such as one or more amines or anhydrides. The curative composition may further comprise one or more solvents, diluents, other additives, such as flow control additives, antifoam agents, or anti-sag agents, as well as other additives such as pigments, reinforcing agents, fillers, elastomers, stabilizers, extenders, plasticizers, or flame retardants depending on the application.

In a ninth aspect, the present invention provides a use of a fluorescent Mannich base for fluorescently tagging a cured epoxy resin, the use comprising curing an epoxy resin using a fluorescent Mannich base, or a curative composition comprising a fluorescent Mannich base.

Preferably, the use comprises curing an epoxy resin using a fluorescent Mannich base, or a curative composition comprising a fluorescent Mannich base at a temperature of no more than 100 °C, more preferably no more than 90 °C, even more preferably no more than 80 °C.

A fluorescent tag (also known as a fluorescent label or fluorescent probe), is a molecule that is attached chemically to a second molecule, in order to aid in the detection or identification of second molecule. In the context of the present invention, a fluorescent Mannich base, for example, a fluorescent Mannich base of formula (1), or any embodiment described in relation thereto, may be attached chemically to an epoxy resin during curing, and thus attached chemically to the cured epoxy resin derived therefrom. This allows the cured epoxy resin to be identified by virtue of the fluorescent tag.

Where the fluorescent Mannich base acts as a curative to an epoxy resin, it will become incorporated into the cured epoxy resin formed therefrom. The cured epoxy resin will thus comprise the fluorophore which can act as a tag which may be detected by the skilled person. The use may include a step of contacting the cured epoxy resin with electromagnetic radiation, preferably having a wavelength of from 380 nm to 750 nm, more preferably 400 nm to 700 nm, even more preferably from 450 nm to 600 nm, and observing the emitted omitted electromagnetic radiation, preferably having a wavelength of from 380 nm to 750 nm, more preferably 400 nm to 700 nm, even more preferably from 450 nm to 600 nm, in order to identify the cured epoxy resin as fluorescently tagged.

Preferably, the fluorescent tag has a maximum excitation wavelength of from 380 nm to 750 nm, and/or a maximum emission wavelength of from 380 nm to 750 nm. More preferably, the fluorophore has a maximum excitation wavelength of from 400 nm to 700 nm, even more preferably from 450 nm to 600 nm. More preferably, the fluorophore has a maximum emission wavelength of from 400 nm to 700 nm, even more preferably from 450 nm to 600 nm. The fluorophore may be further defined by a maximum absorption wavelength of from 380 nm to 750 nm, preferably from 400 nm to 700 nm, more preferably from 450 nm to 600 nm. Preferably, the maximum excitation wavelength, the maximum emission wavelength, and/or the maximum absorption wavelength of the fluorescent Mannich base of the present invention is as measured in aqueous solution.

The invention will now be described by reference to the following non-limiting Examples.

### EXAMPLES

### EXAMPLE 1 - Preparation of a Fluorescent Mannich Base

94 grams [1 Mol] of Phenol and 510 grams [5 Mols] of Dimethylaminopropylamine [DMAPA] was added to a 2 litre, round-bottomed flask equipped with a condenser, mechanical stirrer, addition funnel, dropping funnel, and thermometer. The flask was configured for atmospheric reflux, the agitator started, and the contents were then heated to 60°C. A Nitrogen blanket was applied and 90 grams [5 Mols] of water was added followed by 332 grams of Fluorescein [1 Mol] which was added in 3 aliquots over 205 minutes whilst increasing the temperature to 80°C. The Fluorescein initially settled out but eventually dissolved in the water. The contents were cooled to 21°C and 410 grams [5 Mols] of a 36.5% aqueous solution of Formalin was added in 5 aliquots over a 60-minute period controlling the exotherm in order to maintain the temperature between 40 and 55°C throughout. The contents were then heated to 60°C and held for 30 minutes after which time the contents were heated to 95°C and held for 120 minutes. A sample was taken and evaluated for viscosity, η = 3400 mPa•s at 25°C [Cone and Plate Viscometer].

The flask was configured for atmospheric distillation and heated to 120°C over a 180-minute period receiving distillate between 104-118°C, distillation ceased at 120°C.

The molten solid material was then discharged and allowed to solidify at ambient temperatures to form Mixture 1. Mixture 1 contains a number of fluorescent Mannich base compounds of the present invention, which are formed by this reaction, some of which are outlined below. As would be appreciated, more combinations of substitution patterns are also possible.

### Structures Formed in Mixture 1

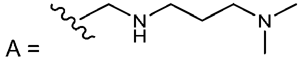

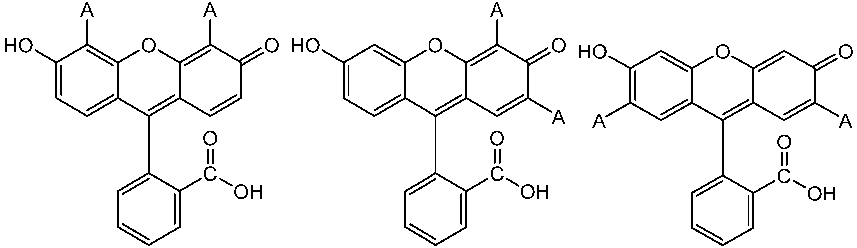

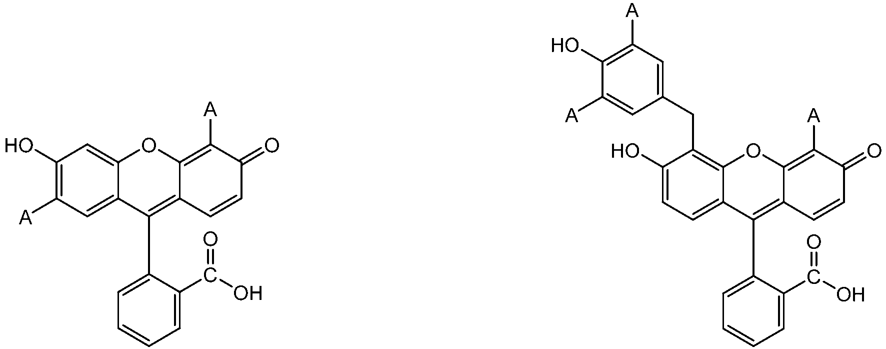

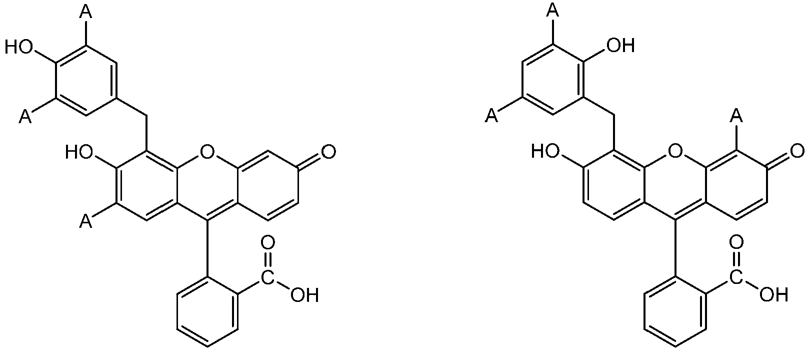

The physical properties of Mixture 1 are shown below.

| Physical test results | | |
|---|---|---|
| Property | Result | Comments |
| Appearance | Solid | Dark colour resin |
| Viscosity at 120°C | 53,400 mPa•s | Amber colour |
| Melting Point | ≈112°C | Ring & Ball method |

### Example 2 - Solubility Testing of Fluorescent Mannich Base

The solubility of the mixture obtained in Example 1 was compared to that of fluorescein and sodium fluorescein.

| Solubility | | |
|---|---|---|
| Solute/Material | Solvent | Result |
| Fluorescein | CURAMINE 36-216 (RTM) | Insoluble |
| Fluorescein | CURAMINE 36-760 (RTM) | Insoluble |
| Sodium Fluorescein | CURAMINE 36-216 (RTM) | Insoluble |
| Sodium Fluorescein | CURAMINE 36-760 (RTM) | Insoluble |
| Mixture 1 | CURAMINE 36-216 (RTM) | Mainly |
| Mixture 1 | CURAMINE 36-760 (RTM) | Mainly |
| Mixture 1 | Benzyl Alcohol | Complete |
| Mixture 1 | Methyl Tetra Hydro Phthalic Anhydride | Insoluble |

As can be seen, fluorescein and sodium fluorescein are insoluble in CURAMINE 36-216 (RTM) and in CURAMINE 36-760 (RTM), which are each commercially available Mannich base curatives. Mixture 1 was soluble in both CURAMINE 36-216 (RTM) and in CURAMINE 36-760 (RTM).

### Example 3 - Curing Properties of the Fluorescent Mannich Base

100 grams of Mixture 1 was dissolved in 100 grams of Benzyl alcohol to provide Mixture 2. This 50% solution (Mixture 2) was then used as a modifying solution for reactivity analysis. 100 grams of Mixture 2 was blended with 100 grams of the commercially available accelerator FURACAT 354 (RTM) [chemically 2,4,6-Tris(dimethylaminomethyl)phenol] shown below.

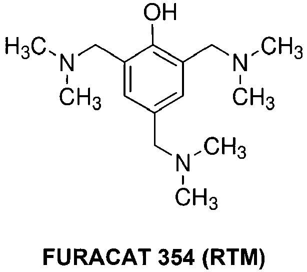

The following epoxy resin systems were made up for analysis.

| | | Epoxy resin system 1* | Epoxy resin system 2** |
|---|---|---|---|
| Material | | Qty | Qty |
| Furox EP 128 (RTM) | Liquid epoxy resin (epoxy equivalent weight of 190) | 100.00 | 100.00 |
| MTHPA | Methyl tetra hydro-phthalic anhydride | 90.00 | 90.00 |
| FURACAT 354 (RTM) | 2,4,6-Tris(dimethylaminomethyl)phenol | 00.38 | - |
| Mixture 2 | 50:50 w/w mixture of 50 % Fluorescent Mannich base solution in benzyl alcohol : 2,4,6-Tris(dimethylaminomethyl)phenol | - | 00.38 |

| Reactivity test | | | |
|---|---|---|---|
| Gel-time at 150 °C | Hot-block method [t-minutes] | 5.3 | 6.2 |

| | | | |
|---|---|---|---|
| * Comparative **Of the invention | | | |

As can be seen, Epoxy resin system 2, comprising the fluorescent Mannich base, enjoyed a comparable gel-time reactivity at 150 °C to comparative Epoxy resin system 1. This demonstrates that the fluorescent Mannich base of the present invention can successfully be incorporated into a curative composition and that said curative composition can be used to cure a standard epoxy resin thereby incorporating the Fluorescent Mannich base into a cured epoxy resin.

Figure 1 depicts the viscosities over time of Epoxy resin system 1 and Epoxy resin system 2 at 40 °C. As can be seen, both epoxy resin systems have similar viscosity at hour zero, with linearly increasing viscosity over time. The increasing viscosity over time corresponds to curing of the epoxy resin system. Although Epoxy resin system 2 cures at a slightly slower speed, both Epoxy resin systems displayed a comparable and steady cure. No adverse impact on stability of the mixture was observed during curing.

### Example 4 - Curing Profile and Fluorescence Study of the Fluorescent Mannich Base

The cure profile of a curative composition containing the fluorescent Mannich base of Example 1 and an epoxy resin was compared to that of a known curative as a control.

### Composition of the invention:

| **Component** | | **Mass Equivalent** |
|---|---|---|
| Furox EP 128 (RTM) | Liquid epoxy resin* | 100.00 |
| MTHPA | Methyl tetra hydro-phthalic anhydride | 80.00 |
| CATALYST | Mixture 1 of Example 1 | 01.00 |

| | | |
|---|---|---|
| *Epoxy Equivalent Weight = 190 | | |

### Control composition:

| **Component** | | **Mass Equivalent** |
|---|---|---|
| Furox EP 128 (RTM) | Liquid epoxy resin* | 100.00 |
| MTHPA | Methyl tetra hydro-phthalic anhydride | 80.00 |
| CATALYST | 2,4,6-Tris(dimethylaminomethyl)phenol | 01.00 |

| | | |
|---|---|---|
| *Epoxy Equivalent Weight = 190 | | |

While some epoxy systems will cure at ambient/modest temperatures, several require an elevated temperature to initiate the chemical curing reaction or to further advance the degree of cure. In many cases the degree of cure is difficult to ascertain as the physical appearance of the material doesn't necessarily appear significantly different. Also, in many cases the epoxy system may prove fit for purpose, subject to application. However, to reach the full performance of the system a cure schedule that provides a high conversion and generation of the highest available cross-link density will be required. This is generally a conditional feature and function of time and temperature. A high degree of conversion and cure will generally yield the optimum mechanical and physical properties available from that system. Identification of sufficient cure is generally measured by glass transition temperature (Tg).

Discs of each composition were cured using the cure profile shown in Figure 2. The curing temperature over time is shown. Samples were taken and the Tg measured after 2 hours at 120 °C, after a further 2 hours at 180 °C, and after a further 6 hours at 180 °C. The resulting Tg values for the composition of the invention and the control composition are shown below.

### Composition of the Invention

| **Sample** | **Cure Schedule** | **Tg** |
|---|---|---|
| Sample 1 | 2 hours at 120°C | 116°C [mid-point] |
| Sample 2 | 2 hours at 120°C + 2 hours at 180°C | 127 °C [mid-point] |
| Sample 3 | 2 hours at 120°C + 8 hours at 180°C | 126°C [mid-point] |

### Control Composition

| **Sample Ref** | **Cure Schedule** | **Tg** |
|---|---|---|
| Control Sample 1 | 2 hours at 120°C | 120°C [mid-point] |
| Control Sample 2 | 2 hours at 120°C + 2 hours at 180°C | 125°C [mid-point] |
| Control Sample 3 | 2 hours at 120°C + 8 hours at 180°C | 128°C [mid-point] |

The epoxy resin curative of the present invention was able to provide comparable Tg without any adverse effects.

Each of samples 1 to 3 and control samples 1 to 3 were evaluated for fluorescence using a ZEISS Axioscope 5, with an Axiocam 305 colour camera, and a lighting device HXP 120C [Metal halide illumination]. Each image was exposed with an exposure time of 10 ms, with an RGB colour module.

Sample 1 was a lime green colour with a HSL-RGB (Hue/Saturation/Lightness-Red/Green/blue) value of Hue: 54, Sat: 182, Lum: 134, Red: 169, Green: 228, Blue: 57. Sample 2 was an apple green colour with a HSL-RGB value of Hue: 49, Sat: 143, Lum: 89, Red: 125, Green: 151, Blue: 38. Sample 3 was a similar apple green colour with a HSL-RGB value of Hue: 50, Sat: 141, Lum: 98, Red: 136, Green: 165, Blue: 43. The curative composition comprising the fluorescent Mannich base of the present invention fluoresces in the visible light region. The cured epoxy resin formed therefrom did not fluoresce in the visible light region, and fluoresced only under exposure to UV light.

No fluorescence in the visible light region was observed in control composition or the cured epoxy resin formed therefrom. Fluorescence was observed only when the control samples were exposed to UV light.

Without being bound to a particular theory, it appears that curing at a high temperature may result in a cured epoxy resin which does not retain the fluorescent properties of the fluorescent Mannich base. Nevertheless, this is still an advantageous situation as it allows a user to track the progress of the curing process by measuring the level of fluorescence of the curing mixture.

### Example 5 - Long Term Curing Profile and Fluorescence Study of the Fluorescent Mannich Base

The cure profile of a second curative composition containing the fluorescent Mannich base of Example 1 and an epoxy resin was compared to that of a known curative as a control.

### Second composition of the invention

| **Component** | | **Mass Equivalent** |
|---|---|---|
| Furox EP 128 (RTM) | Liquid epoxy resin* | 100.00 |
| CURAMINE 31-537 LFP (RTM) | Phenolic Mannich base | 25.00 |
| Accelerator/Tracer | Mixture 1 of Example 1 | 01.00 |

| | | |
|---|---|---|
| *Epoxy Equivalent Weight = 190 | | |

### Control Composition

| **Component** | | **Mass Equivalent** |
|---|---|---|
| Furox EP 128 (RTM) | Liquid epoxy resin* | 100.00 |
| CURAMINE 31-537 LFP (RTM) | Phenolic Mannich base | 25.00 |
| Accelerator | 2,4,6-Tris(dimethylaminomethyl)phenol | 01.00 |

| | | |
|---|---|---|
| *Epoxy Equivalent Weight = 190 | | |

Discs of each composition were cured using the cure profile shown in Figure 2. The curing temperature over time is shown. Samples were taken and the Tg measured after 7 days at 25 °C, and then after a further 1 hour at 100 °C. The resulting Tg values for the composition of the invention and the control composition after 7 days at 25 °C, and after a further 1 hour at 100 °C are shown below.

### Composition of the Invention

| **Sample** | **Cure Schedule** | **Tg** |
|---|---|---|
| Sample 4 | 7 days at 25°C | 66 °C [mid-point] |
| Sample 5 | 7 Days at 25°C + 1 hour at 100°C | 117 °C [mid-point] |

### Control Composition

| **Sample Ref** | **Cure Schedule** | **Tg** |
|---|---|---|
| Control Sample 4 | 7 days at 25°C | 65 °C [mid-point] |
| Control Sample 5 | 7 Days at 25°C + 1 hour at 100°C | 115 °C [mid-point] |

The samples were evaluated for fluorescence using a ZEISS Axioscope 5, with an Axiocam 305 colour camera, and a lighting device HXP 120C [Metal halide illumination]. Each image was exposed with an exposure time of 10 ms, with an RGB colour module.

Control samples 4 and 5 were a black colour and no fluorescence in the visible light region was observed.

Samples 4 and 5 of the invention both fluoresced with a forest green colour with a HSL-RGB value of Hue: 72, Sat: 134, Lum: 94, Red: 67, Green: 155, Blue: 44. In this example, the fluorescent properties of the fluorescent Mannich base were retained in the cured epoxy resin formed therefrom.

Without being bound to a particular theory, it appears that curing at a lower temperature may assist in retaining the fluorescent properties of the fluorescent Mannich base during curing and thus imparting fluorescent properties on the cured epoxy resin formed therefrom.

## Claims

1. A fluorescent Mannich base for use as an epoxy resin hardener, wherein the fluorescent Mannich base comprises:
i) a fluorophore comprising a conjugated pi system containing at least one aromatic ring, and having a maximum excitation wavelength of from 380 nm to 750 nm, and a maximum emission wavelength of from 380 nm to 750 nm; and
ii) at least one Mannich base group, wherein the Mannich base group is an amine group bonded to an SP³ hybridised carbon atom, wherein said SP³ hybridised carbon atom is bonded to an aromatic ring; and wherein said amine group is bonded to two further groups, neither of which comprising a carboxylic acid or a carboxylic acid ester moiety; or a tautomeric precursor thereof.

2. The fluorescent Mannich base of Claim 1, wherein one or more of the following is satisfied:
a) the conjugated pi system comprises at least one hydroxyl or amine group; preferably wherein the conjugated pi system comprises at least one hydroxyl or amine group, and further comprises at least one carbonyl or imine group;
b) the conjugated pi system comprises at least 21 conjugated carbon, oxygen, and/or nitrogen atoms; preferably at least 22 conjugated carbon, oxygen, and/or nitrogen atoms; more preferably at least 24 conjugated carbon, oxygen, and/or nitrogen atoms;
c) the fluorophore is selected from an optionally substituted cyanine, carbocyanine, coumarin, and triarylmethane dye; preferably an optionally substituted xanthene dye, more preferably an optionally substituted fluorescein or an optionally substituted rhodamine;
d) the fluorescent Mannich base comprises at least two Mannich base groups;
e) the fluorescent Mannich base comprises a phenolic group having a bond to an SP³ hybridised carbon atom, wherein said SP³ hybridised carbon atom is bonded to an aromatic ring comprised within the fluorophore; and wherein said phenolic group is further substituted with one or more Mannich base group wherein said Mannich base group is defined as an amine group having one bond to an SP³ hybridised carbon atom, and wherein said amine group is bonded to two further groups, neither of which comprising a carboxylic acid or a carboxylic acid ester moiety; and/or
f) the amine group or amine groups of the at least one Mannich base group are secondary amines.

3. A fluorescent Mannich base of formula (1), or a salt thereof: 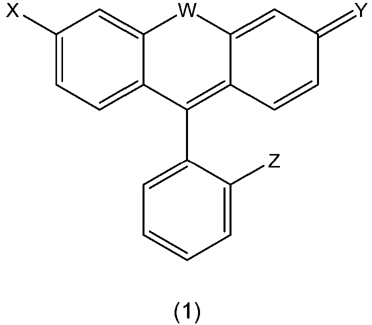
wherein the fluorescent Mannich base of formula (1) is substituted with one or more A substituents, wherein each A substituent is bonded to an aromatic carbon atom;
wherein each A substituent is independently of formula (A1) or (A2): 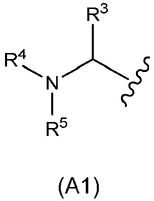 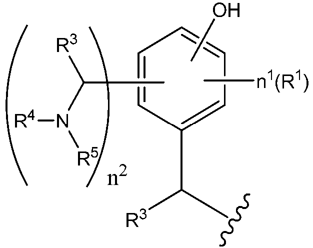 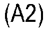
wherein 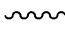
represents the point of attachment of the A substituent to the fluorescent Mannich base of formula (1):
optionally wherein the fluorescent Mannich base is substituted with one or more R¹ groups, wherein each R¹ group is bonded to an aromatic carbon atom;
wherein each R¹ is independently selected from: -C₁ to C₂₀ alkyl, -C₁ to C₂₀ haloalkyl, -C₃ to C₂₀ cycloalkyl, -C₂ to C₂₀; alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -O(CO)H, -O(CO)R², -NH(CO)H, -NH(CO)R², - NR²(CO)H, -NR²(CO)R², -SH, -SR², -SO_{2H}, -SO₂R², -SO₃R², -SO₃H, -SiR²₃, -NO₂, -CN, - F, -Cl, -Br, and -I;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino;
wherein W is selected from -O-, -SO₂-, SiMe₂-, -CO-, and -PO₂-, a direct bond, or wherein W is absent;
wherein X is selected from -OR⁶ and -NR⁶₂;
wherein Y is selected from =O, =NR⁶, and =NR⁶₂⁺;
wherein Z is selected from -H, -COOR⁶, -CONR⁶₂, -SO₂OR⁶, -SO₂NR⁶₂, and - CONHNHR⁶;
wherein each R³ is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl; wherein each R³ is optionally substituted with one or more groups selected from -C₁ to C₁₀ alkyl, -C₁ to C₁₀ haloalkyl, -C₁ to C₁₀ alkoxy, -OH, and =O;
wherein each R⁴ is independently selected from: -H, and -C₁ to C₁₀₀ hydrocarbyl group;
wherein each R⁵ is independently selected from: -H, and -C₁ to C₁₀₀ hydrocarbyl group;
wherein each R⁴ and R⁵ bonded the same nitrogen atom may be taken together to form a -C₃ to C₁₀₀ hydrocarbyl group;
with the proviso that none of the R⁴ or R⁵ groups comprise a carboxylic acid or a carboxylic acid ester;
each R⁶ is independently selected from -H, and a -C₁ to C₅₀ hydrocarbyl group;
wherein each n¹ is independently from 0 to 3;
wherein each n² is independently 1 or 2; and
with the proviso that n¹ + n² for each individual A2 substituent is from 1 to 4;
or a tautomeric precursor thereof.

4. The fluorescent Mannich base of Claim 3, wherein each A substituent is bonded to an aromatic carbon atom on the aromatic ring substituted by -X, or an aromatic carbon atom on the aromatic ring substituted by =Y; preferably wherein each A substituent is at a position ortho to -X or =Y.

5. The fluorescent Mannich base of Claim 3 or Claim 4, wherein the fluorescent Mannich base is substituted with at least one A2 substituent, preferably wherein each A2 substituent is of the formula (A2i) or (A2ii): 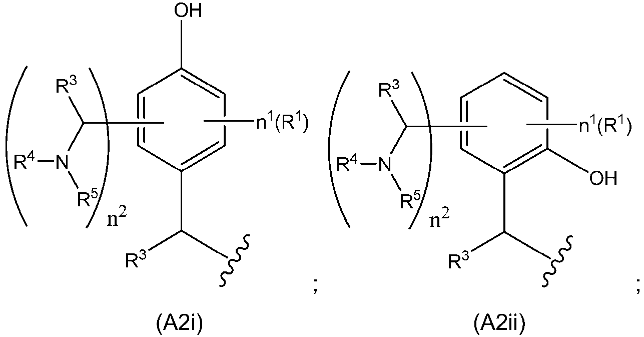 more preferably wherein each A2 substituent is of the formula (A2iii), (A2iv), (A2v), or (A2vi):

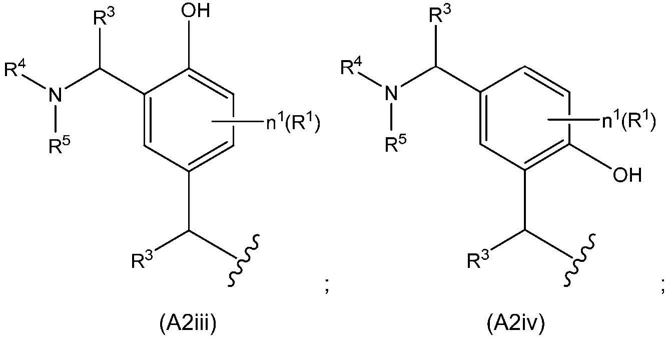

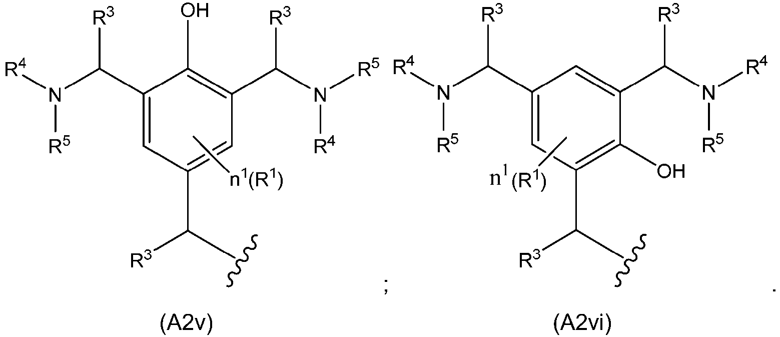

6. The fluorescent Mannich base of any one of Claims 3 to 5, wherein one or more of the following is satisfied:
a) W is -O-;
b) R⁶ is independently selected from -H, and -C₁ to C₁₀ alkyl;
c) X is -OR⁶, and Y is =O; preferably wherein X is -OH;
d) X is selected from -NH₂, -NHMe, -NHEt, -NMe₂, -NMeEt, and -NEt₂ and Y is selected from =NH, =NMe, =NEt, =NH₂⁺, =NHMe⁺, =NHEt⁺, =NMe₂⁺, =NMeEt⁺, and =NEt₂⁺;
e) Z is -COOR⁶, preferably wherein Z is -COOH;
f) each n¹ is 0; and/or
g) each R³ is -H or -furanyl.

7. A process for preparing a fluorescent Mannich base, or a tautomeric precursor thereof, of any one of Claims 1 to 6, the process comprising performing a Mannich reaction using:
i) a fluorescent compound comprising a conjugated pi system containing at least one aromatic ring or a tautomeric precursor thereof;
ii) an active amine; and
iii) an aldehyde;
wherein the active amine does not comprise a carboxylic acid or a carboxylic acid ester group.

8. The process of Claim 7, wherein one or more of the following is satisfied:
a) the active amine is a secondary amine;
b) the molar ratio of the aldehyde to the active amine is less than 2 : 1;
c) the Mannich reaction further comprises: iv) an optionally substituted phenolic compound, preferably selected from phenol, resorcinol, guaiacol, cardanol, and phloroglucinol, more preferably phenol;
d) the fluorescent compound comprises a conjugated pi system containing at least one aromatic ring is selected from fluorescein, a halogenated analogue of fluorescein, a rhodamine, or a tautomer and/or salt thereof, preferably fluorescein; and/or
e) the aldehyde is formaldehyde, and is optionally introduced to the reaction in the form of a paraformaldehyde.

9. A curative composition comprising the fluorescent Mannich base, or a tautomeric precursor thereof, of any one of Claims 1 to 6; and at least one additional epoxy resin curative.

10. The curative composition of Claim 9, wherein the at least one additional epoxy resin hardener comprises 2,4,6-tris(dimethylaminomethyl)phenol.

11. A method for preparing a cured epoxy resin, said method comprising:
a) contacting an epoxy resin with a fluorescent Mannich base, or a tautomeric precursor thereof, of any one of Claims 1 to 6, a fluorescent Mannich base or a tautomeric precursor thereof prepared or preparable by the method of Claim 7 or 8, or a composition of Claim 9 or 10; and
b) forming a cured epoxy resin, preferably wherein the epoxy resin is selected from epoxidized novolacs and bisphenols (A or F) or halogenated analogues thereof.

12. A cured epoxy resin prepared, or preparable, by the method of Claim 11.

13. Use of a fluorescent Mannich base of any one of Claims 1 to 6, a fluorescent Mannich base prepared or preparable by the method of Claim 7 or 8, or a composition of Claim 9 or 10 for causing crosslinking in an epoxy resin.

14. A method of solubilising a fluorophore having a maximum excitation wavelength of from 380 nm to 750 nm and a maximum emission wavelength of from 380 nm to 750 nm in a curative composition comprising an epoxy resin hardener, the method comprising attaching at least one Mannich base group to a fluorescent compound comprising the fluorophore and dissolving the resulting compound in said composition.

15. The use of a fluorescent Mannich base for fluorescently tagging a cured epoxy resin, or a curative composition comprising a fluorescent Mannich base, the use comprising curing an epoxy resin using a fluorescent Mannich base, or a curative composition comprising a fluorescent Mannich base.
